(19) Europäisches Patentamt
European Patent Office
Office européen des brevets

(11) EP 2 703 900 B1

(12) **EUROPEAN PATENT SPECIFICATION**

(45) Date of publication and mention of the grant of the patent:
**23.09.2015 Bulletin 2015/39**

(21) Application number: **12776836.4**

(22) Date of filing: **24.04.2012**

(51) Int Cl.:
***G03G 15/02*** *(2006.01)* ***C08G 79/14*** *(2006.01)*

(86) International application number:
**PCT/JP2012/002812**

(87) International publication number:
**WO 2012/147338 (01.11.2012 Gazette 2012/44)**

(54) **CHARGING MEMBER, PROCESS CARTRIDGE AND ELECTROPHOTOGRAPHIC APPARATUS**

LADEELEMENT, PROZESSKARTUSCHE UND ELEKTROFOTOGRAFISCHE VORRICHTUNG

ÉLÉMENT DE CHARGE, CARTOUCHE DE TRAITEMENT ET APPAREIL ÉLECTROPHOTOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2011 JP 2011101335**

(43) Date of publication of application:
**05.03.2014 Bulletin 2014/10**

(73) Proprietor: **Canon Kabushiki Kaisha**
**Tokyo 146-8501 (JP)**

(72) Inventors:
- **MASU, Hiroki**
  **Tokyo 146-8501 (JP)**
- **KURODA, Noriaki**
  **Tokyo 146-8501 (JP)**
- **KODAMA, Masataka**
  **Tokyo 146-8501 (JP)**
- **SUZUMURA, Noriko**
  **Tokyo 146-8501 (JP)**
- **TOMOMIZU, Yuya**
  **Tokyo 146-8501 (JP)**

(74) Representative: **TBK**
**Bavariaring 4-6**
**80336 München (DE)**

(56) References cited:

| | |
|---|---|
| **EP-A1- 1 834 217** | **EP-A1- 1 991 915** |
| **EP-A2- 2 115 039** | **JP-A- 61 066 735** |
| **JP-A- 2002 080 785** | **JP-A- 2007 004 102** |
| **JP-A- 2007 264 611** | **JP-A- 2009 058 634** |
| **JP-A- 2009 151 159** | **JP-A- 2011 154 353** |
| **JP-A- 2012 093 720** | **US-A1- 2010 135 695** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 703 900 B1

## Description

### Technical Field

This invention relates to a charging member, a process cartridge and an electrophotographic apparatus.

### Background Art

At present, a contact charging method has been put into practical use as one of methods for charging the surface of an electrophotographic photosensitive member electrostatically. The contact charging method is a method in which a voltage is applied to a charging member disposed in contact with the photosensitive member, to cause micro-discharge at the part of contact between the charging member and the photosensitive member and the vicinity thereof to charge the surface of the photosensitive member electrostatically.

From the viewpoint of sufficiently and uniformly securing a contact nip between the charging member and the photosensitive member, it is common for the charging member used in such a contact charging method to be so set up as to have an electrically conductive elastic layer. Such a conductive elastic layer, however, often contains low-molecular weight components in a relatively large quantity, and hence the low-molecular weight components may bleed out to the surface of the charging member and adhere to the photosensitive member. Accordingly, in order to keep the low-molecular weight components from bleeding out to the surface of the charging member, a surface layer is provided on the conductive elastic layer in some cases.

Now, in the contact charging method, a method in which a voltage composed of only direct-current voltage is applied to the charging member (hereinafter also "DC contact charging method") is employed in some cases in order to make a charging assembly and an electrophotographic apparatus compact and also achieve cost reduction.

However, as a problem involved when the DC contact charging method is employed, it may come about that a potential difference is produced between saturated potentials of the charging first round and charging second and subsequent rounds in charging the photosensitive member. Such a potential difference causes a phenomenon that, when halftone images are reproduced continuously after images of characters or black figures have been reproduced, any marks of characters or black figures having immediately previously been reproduced appear on the halftone images. In the present specification, images where any marks of such images immediately previously reproduced have appeared are also called "ghost images".

Then, for the purpose of keeping the ghost images from occurring, PTL 1 proposes to make a surface layer of a charging member high in electrical resistance value and also thin-film, and further make a conductive elastic layer thereof low in electrical resistance value.

### Citation List

### Patent Literature

PTL 1: Japanese Patent Application Laid-Open No. 2009-086263

### Summary of Invention

### Technical Problem

However, in full-color electrophotographic image forming apparatus, there is a problem of occurrence of "multi-color ghost images" which are caused by a potential difference that is different in type from the above potential difference.

The cause of occurrence of the "multi-color ghost images" is explained below. That is, as a full-color electrophotographic image forming apparatus, one making use of an intermediate transfer member is known in the art. The formation of full-color electrophotographic images by use of the intermediate transfer member is performed by forming respective-color toner images on a plurality of photosensitive members, transferring the respective-color toner images sequentially from the respective photosensitive members to the intermediate transfer member, and thereafter transferring multi-color toner images held on the intermediate transfer member, all together to a recording medium such as paper.

Here, when the intermediate transfer member comes into contact with a next-station photosensitive member in the state the former holds toner images thereon, a potential difference comes about inevitably on the photosensitive member because the electric current flowing from the intermediate transfer member to the photosensitive member differs in quantity between the part where the toner images are formed on the intermediate transfer member and the part where the toner images are not formed on the same.

For the photosensitive member on which such a potential difference has come about, if the potential difference

can not be eliminated when the photosensitive member is charged for forming new electrophotographic images thereon, density non-uniformity caused by the potential difference may occur in the electrophotographic images formed newly. Electrophotographic images in which such density non-uniformity has occurred are called the "multi-color ghost images".

The larger the number of layers of toners the intermediate transfer member standing in contact with any photosensitive member holds is, the larger the potential difference produced on the photosensitive member comes to be. As the result, there is a tendency for the density non-uniformity as well to more greatly occur in the electrophotographic images. Then, the higher the process speed is made, the more the multi-color ghost images tend to occur.

As a method of keeping the multi-color ghost images from occurring, a method is known in which the potential difference having come about on the photosensitive member is removed by using a pre-exposure means, previous to primary charging of the photosensitive member by means of the charging member. However, if without use of such a pre-exposure means the multi-color ghost images can be kept from occurring, this can make electrophotographic apparatus and process cartridges compact and also can achieve cost reduction.

Accordingly, the present invention is directed to providing a charging member that has a superior charging performance and can perform uniform charging to a stated potential even for a photosensitive member on which the potential difference has come about.

The present invention is also directed to providing an electrophotographic apparatus and a process cartridge which both can form high-grade electrophotographic images stably.

**Solution to Problem**

According to one aspect of the present invention, there is provided a charging member having a substrate, an elastic layer and a surface layer, wherein the surface layer contains a high-molecular compound having an Si-O-Nb linkage; and the high-molecular compound has a constitutional unit represented by the following formula (1) and a constitutional unit represented by the following formula (2).

Formula (1)

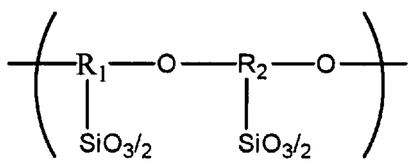

Formula (2) $NbO_{5/2}$

In the formula (1), $R_1$ and $R_2$ each independently represent any of structures represented by the following formulas (3) to (6).

Formula (3)

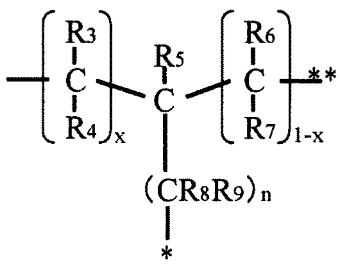

Formula (4)

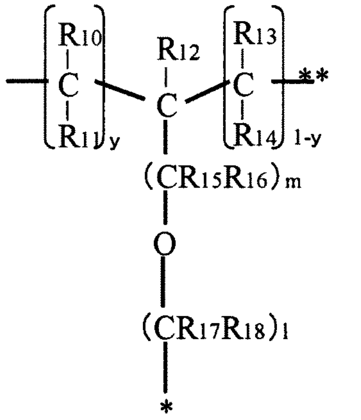

Formula (5)

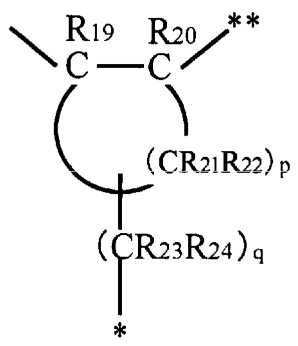

Formula (6)

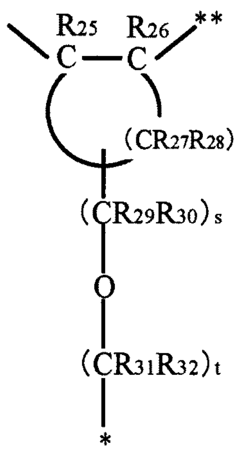

In the formulas (3) to (6), $R_3$ to $R_7$, $R_{10}$ to $R_{14}$, $R_{19}$, $R_{20}$, $R_{25}$ and $R_{26}$ each independently represent a hydrogen atom, an alkyl group having 1 to 4 carbon atom(s), a hydroxyl group, a carboxyl group or an amino group; $R_8$, $R_9$, $R_{15}$ to $R_{18}$, $R_{23}$, $R_{24}$ and $R_{29}$ to $R_{32}$ each independently represent a hydrogen atom or an alkyl group having 1 to 4 carbon atom(s); $R_{21}$, $R_{22}$, $R_{27}$ and $R_{28}$ each independently represent a hydrogen atom, an alkoxyl group or alkyl group having 1 to 4 carbon atom(s); n, m, l, q, s and t each independently represent an integer of 1 to 8, p and r each independently represent an integer of 4 to 12, and x and y each independently represent 0 or 1; and an asterisk * and a double asterisk ** each represent the position of bonding with the silicon atom and oxygen atom, respectively, in the formula (1).

According to another aspect of the present invention, there is provided an electrophotographic apparatus which has an electrophotographic photosensitive member and the above charging member, disposed in contact with the electrophotographic photosensitive member. According to a further aspect of the present invention, there is provided a process cartridge which has an electrophotographic photosensitive member and the above charging member, disposed in contact with the electrophotographic photosensitive member, and is so set up as to be detachably mountable to the main body of an electrophotographic apparatus.

## Advantageous Effects of Invention

According to the present invention, a charging member is provided which can uniformly charge a photosensitive member without requiring any pre-exposure means in a low-, medium- or high-speed electrophotographic apparatus, and has a sufficient charging performance. An electrophotographic apparatus and a process cartridge are also provided which can keep multi-color ghost images from occurring and can form high-grade electrophotographic images stably.

## Brief Description of Drawings

Fig. 1 is a view showing an example of the charging member according to the present invention.
Fig. 2 is a schematic view of the construction of an electrophotographic apparatus having the charging member according to the present invention.
Fig. 3 is a chart showing the results of measurement by $^{29}$Si-NMR of a high-molecular compound according to the present invention.
Fig. 4 is a chart showing the results of measurement by $^{13}$C-NMR of a high-molecular compound according to the present invention.
Fig. 5 is a schematic view of an instrument for measuring the surface potential of a photosensitive drum.
Fig. 6 is an illustration of cross-linking reaction in the step of forming the surface layer according to the present invention.

## Description of Embodiments

The charging member of the present invention has a substrate, an elastic layer formed on the substrate and a surface layer formed on the elastic layer. The simplest construction of the charging member is the construction that two layers, the elastic layer and the surface layer, are provided on the substrate. One or two or more different layer(s) may also be provided between the substrate and the elastic layer and/or between the elastic layer and the surface layer. In Fig. 1 showing a cross section of a roller-shaped charging member (charging roller), which is a typical example of the charging member, reference numeral 101 denotes the substrate; 102, the elastic layer; and 103, the surface layer.

(Substrate)

As the substrate of the charging member, it may at least have conductivity (a conductive substrate). For example, a substrate made of a metal (or made of an alloy) such as iron, copper, stainless steel, aluminum, an aluminum alloy or nickel may be used. For the purpose of providing scratch resistance, surface treatment such as plating may also be applied to the surface of any of these substrates as long as its conductivity is not damaged.

(Elastic layer)

In the elastic layer, one or two or more of elastic materials such as rubbers or thermoplastic elastomers may be used which are used in elastic layers (conductive elastic layers) of conventional charging members.
The rubbers may include the following: Urethane rubbers, silicone rubbers, butadiene rubbers, isoprene rubbers, chloroprene rubbers, styrene-butadiene rubbers, ethylene-propylene rubbers, polynorbornene rubbers, styrene-butadiene-styrene rubbers, acrylonitrile rubbers, epichlorohydrin rubbers and alkyl ether rubbers.
The thermoplastic elastomer may include, e.g., styrene type elastomers and olefin type elastomers. Commercially available products of the styrene type elastomers may include, e.g., RABARON, trade name, available from Mitsubishi Chemical Corporation; and SEPTON COMPOUND, trade name, available from Kuraray Co., Ltd. Commercially available products of the olefin type elastomers may include, e.g., THERMOLAN, trade name, available from Mitsubishi Chemical Corporation; MILASTOMER, trade name, available from Mitsui Petrochemical Industries, Ltd.; SUMITOMO TPE, trade name, available from Sumitomo Chemical Co., Ltd.; and SANTOPRENE, trade name, available from Advanced Elastomer Systems, L.P.

A conducting agent may also appropriately be used in the elastic layer. This enables control of its conductivity at a stated value. The electrical resistance value of the elastic layer may be controlled by appropriately selecting the type and amount of the conducting agent to be used. The elastic layer may have an electrical resistance value of from $10^2$ Ω or more to $10^8$ Ω or less as a preferable range, and from $10^3$ Ω or more to $10^6$ Ω or less as a much preferable range. The conducting agent may include, e.g., cationic surface-active agents, anionic surface-active agents, amphoteric surface-active agents, antistatic agents and electrolytes.

The cationic surface-active agents may include the following: Salts of quaternary ammoniums such as lauryl trimethylammonium, stearyl trimethylammonium, octadodecyl trimethylammonium, dodecyl trimethylammonium, hexadecyl trimethylammonium, and modified fatty acid dimethyl ethylammonium; perchlorates, chlorates, tetrafluoroborates, ethosulfates, and benzyl halides such as benzyl bromide and benzyl chloride.

The anionic surface-active agents may include the following: Aliphatic sulfonates, higher alcohol sulfates, higher alcohol ethylene oxide addition sulfates, higher alcohol phosphates, and higher alcohol ethylene oxide addition phosphates.

The antistatic agents may include, e.g., nonionic antistatic agents such as higher alcohol ethylene oxides, polyethylene glycol fatty esters, and polyhydric alcohol fatty esters. The electrolytes may include, e.g., salts (such as quaternary ammonium salts) of metals belonging to Group 1 of the periodic table (such as Li, Na and K). The salts of metals belonging to Group 1 of the periodic table may specifically include $LiCF_3SO_3$, $NaClO_4$, $LiAsF_6$, $LiBF_4$, NaSCN, KSCN and NaCl.

As the conducting agent for the elastic layer, also usable are salts (such as $Ca(ClO_4)_2$) of metals belonging to Group 2 of the periodic table (such as Ca and Ba), and antistatic agents derived therefrom. Still also usable are ion-conductive conducting agents such as complexes of any of these with polyhydric alcohols or derivatives thereof, and complexes of any of these with monools. The polyhydric alcohols may include 1,4-butanediol, ethylene glycol, polyethylene glycol, propylene glycol and polypropylene glycol. The monools may include ethylene glycol monomethyl ether and ethylene glycol monoethyl ether.

As the conducting agent for the elastic layer, also usable are conductive carbons such as KETJEN BLACK EC, acetylene black, rubber-purpose carbon, color(ink)-purpose carbon having been treated by oxidation, and thermally decomposed carbon. The rubber-purpose carbon may specifically include, e.g., the following: Super Abrasion Furnace (SAF: super-resistance to abrasion), Intermediate Super Abrasion Furnace (ISAF: intermediate super-resistance to abrasion), High Abrasion Furnace (HAF: high resistance to abrasion), Fast Extruding Furnace (FEF: good extrudability), General Purpose Furnace (GPF: general-purpose properties), Semi Reinforcing Furnace (SRF: semi-reinforcing properties), Fine Thermal (FT: fine-particle thermally decomposed), and Medium Thermal (MT: medium-particle thermally decomposed).

As the conducting agent for the elastic layer, the following may also be used: Graphites such as natural graphite and artificial graphite; metal oxides such as tin oxide, titanium oxide and zinc oxide; metals such as nickel, copper, silver and germanium; and conductive polymers such as polyaniline, polypyrrole and polyacetylene.

An inorganic or organic filler and a cross-linking agent may also be added to the elastic layer. Such a filler may include, e.g., silica (white carbon), calcium carbonate, magnesium carbonate, clay, talc, zeolite, alumina, barium sulfate and aluminum sulfate. The cross-linking agent may include, e.g., sulfur, peroxides, cross-linking auxiliaries, cross-linking accelerators, cross-linking acceleration auxiliaries, and cross-linking retarders.

The elastic layer may preferably have a hardness, as MD-1 hardness, of 60 degrees or more to 85 degrees or less, and particularly from 70 degrees or more to 80 degrees or less, from the viewpoint of keeping the charging member from deforming when the charging member and the charging object member electrophotographic photosensitive member are brought into contact with each other.

The elastic layer may also preferably be in what is called a crown shape in which it is larger in thickness at the middle of the elastic layer than at its end portions.

(Surface layer)

The surface layer constituting the charging member according to the present invention contains a high-molecular compound having an Si-O-Nb linkage, and the high-molecular compound has a constitutional unit represented by the following formula (1) and a constitutional unit represented by the following formula (2).

Formula (1)

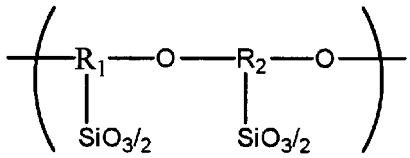

Formula (2) $NbO_{5/2}$

In the formula (1), $R_1$ and $R_2$ each independently represent any of structures represented by the following formulas (3) to (6).

Formula (3)

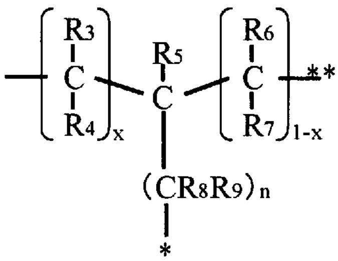

Formula (4)

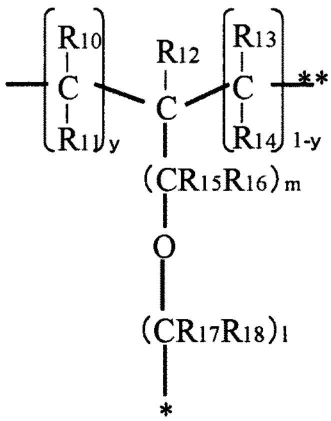

Formula (5)

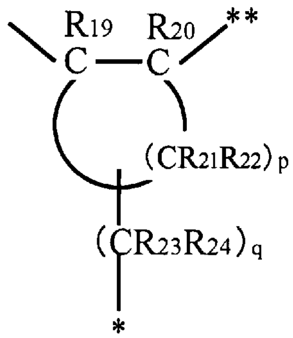

Formula (6)

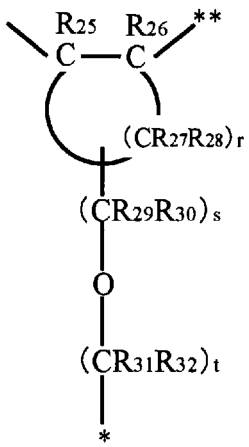

In the formulas (3) to (6), $R_3$ to $R_7$, $R_{10}$ to $R_{14}$, $R_{19}$, $R_{20}$, $R_{25}$ and $R_{26}$ each independently represent a hydrogen atom, an alkyl group having 1 to 4 carbon atom(s), a hydroxyl group, a carboxyl group or an amino group; $R_8$, $R_9$, $R_{15}$ to $R_{18}$, $R_{23}$, $R_{24}$ and $R_{29}$ to $R_{32}$ each independently represent a hydrogen atom or an alkyl group having 1 to 4 carbon atom(s); $R_{21}$, $R_{22}$, $R_{27}$ and $R_{28}$ each independently represent a hydrogen atom, an alkoxyl group or alkyl group having 1 to 4 carbon atom(s); n, m, l, q, s and t each independently represent an integer of 1 to 8, p and r each independently represent an integer of 4 to 12, and x and y each independently represent 0 or 1; and an asterisk * and a double asterisk ** each represent the position of bonding with the silicon atom and oxygen atom, respectively, in the formula (1).

The high-molecular compound according to the present invention has a high crosslink density because it has the structure wherein siloxane linkages and organic-chain moieties bonded to the silicon atoms stand polymerized with one another. Hence, where the surface layer composed of such a high-molecular compound is formed on the elastic layer of the charging member, any low-molecular weight component in the elastic layer can effectively be kept from exuding to the surface of the charging member. In addition, that the high-molecular compound has the Si-O-Nb linkage therein enables the charging member to be improved in its charging ability.

As $R_1$ and $R_2$ in the formula (1) representing the unit in the high-molecular compound, these may preferably each independently be any structure selected from structures represented by the following formulas (7) to (10). Making them have such structures can make the surface layer tougher and superior in durability. In particular, structures each having an ether group as represented by the following formulas (8) and (10) can make the surface layer more improved in its adherence to the elastic layer.

Formula (7)

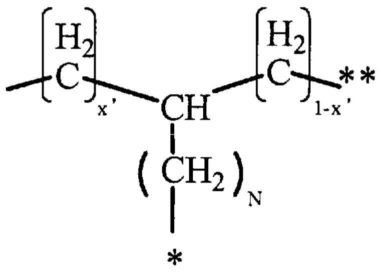

Formula (8)

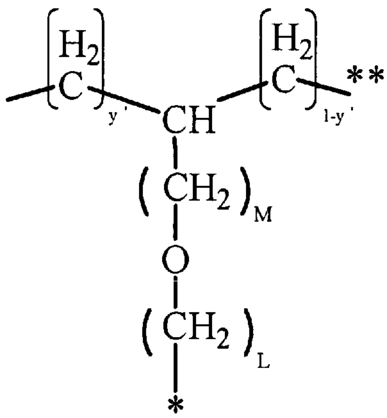

Formula (9)

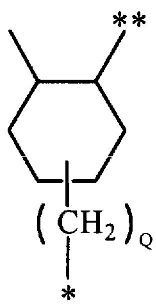

Formula (10)

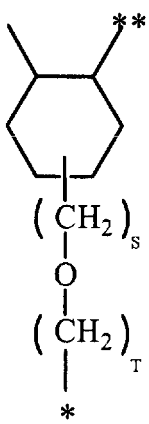

In the formulas (7) to (10), N, M, L, Q, S and T each independently represent an integer of 1 or more to 8 or less, and x' and y' each independently represent 0 or 1. An asterisk * and a double asterisk ** each represent the position of bonding with the silicon atom and oxygen atom, respectively, in the formula (1).

As an example of the high-molecular compound according to the present invention, part of structure of the high-molecular compound formed when $R_1$ in the formula (1) is the structure represented by the formula (3) and $R_2$ is the structure represented by the formula (4) is shown below.

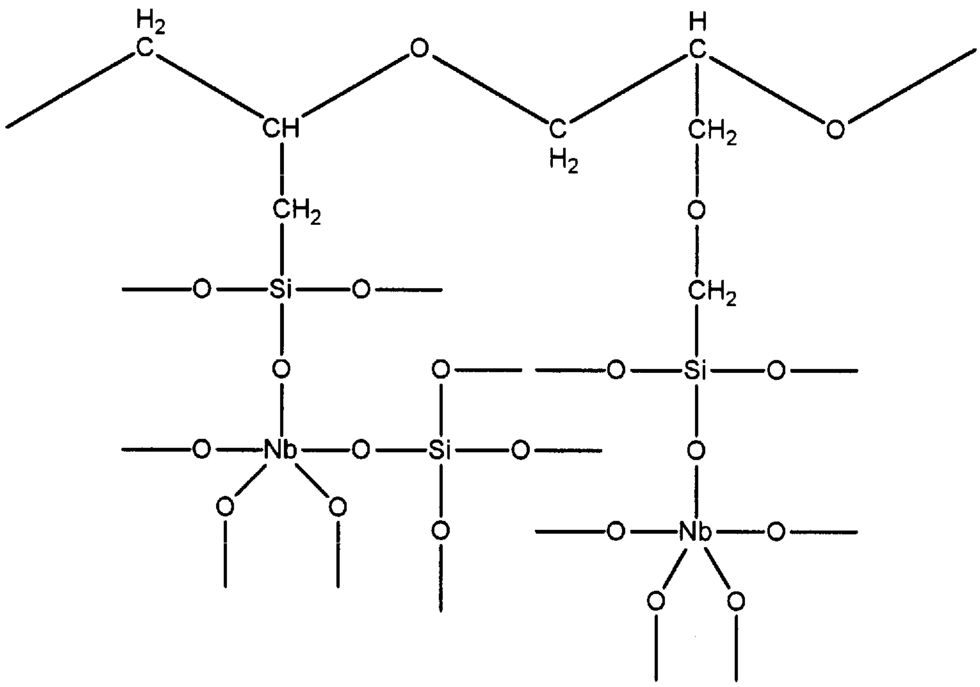

As another example of the high-molecular compound according to the present invention, part of structure of the high-molecular compound formed when $R_1$ in the formula (1) is the structure represented by the formula (3) and $R_2$ is the structure represented by the formula (6) is shown below.

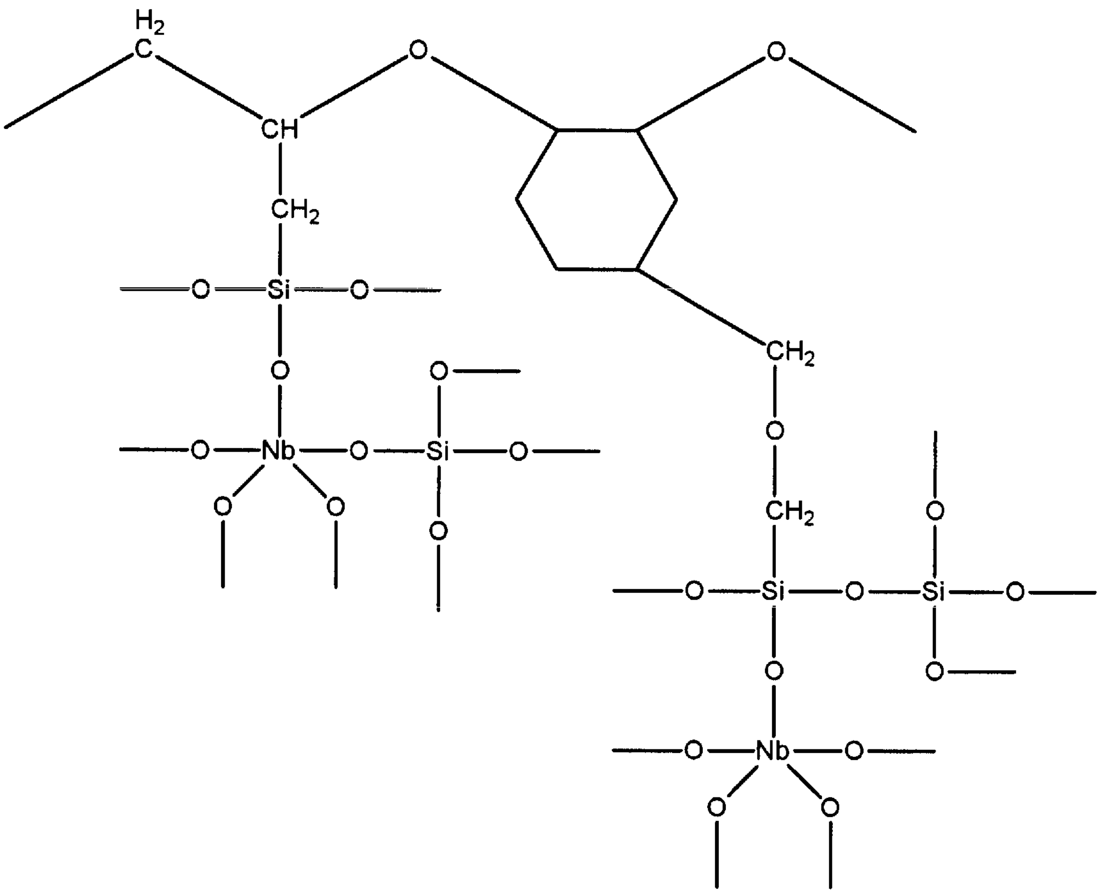

In the high-molecular compound, the ratio of the number of atoms of niobium to that of silicon, Nb/Si, may preferably be from 0.1 or more to 12.5 or less. This value is preferably 0.1 or more from the viewpoint of an improvement in its charging ability, and much preferably 0.5 or more. It is preferably 12.5 or less from the viewpoint of making stable the coating performance and storage properties of a surface layer coating solution, and much preferably be 10.0 or less.

The high-molecular compound used in the present invention is obtained by subjecting a hydrolyzable compound having a structure represented by the following formula (11) and a hydrolyzable compound having a structure represented by the following formula (12), to hydrolysis and dehydration condensation to obtain a condensate, and thereafter cleaving epoxy groups the condensate has, to effect cross-linking. Here, the degree of hydrolysis and condensation taking place at the trifunctional moiety of the formula (11) and the pentafunctional moiety of the formula (12) may be controlled to control modulus of elasticity and denseness as film properties. Also, the organic-chain moiety of $R_{33}$ in the formula (11) may be used as a curing site. This enables control of the toughness of the surface layer and the adherence of the surface layer to the elastic layer. $R_{33}$ may also be set to be an organic group having an epoxy group capable of ring-opening by irradiation with ultraviolet rays. This can make curing time shorter than that for any conventional heat-curable materials, and can keep the surface layer from deteriorating thermally.

Formula (11) $R_{33}\text{-Si}\,(OR_{34})\,(OR_{35})\,(OR_{36})$

Formula (12) $Nb(OR_{37})\,(OR_{38})\,(OR_{39})\,(OR_{40})\,(OR_{41})$

In the formula (11), $R_{33}$ represents any of structures represented by the following formulas (13) to (16), each having an epoxy group; and $R_{34}$ to $R_{36}$ each independently represent a hydrocarbon group. In the formula (12), $R_{37}$ to $R_{41}$ each also independently represent a hydrocarbon group.

Formula (13)

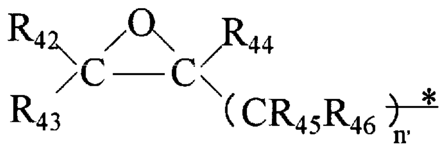

Formula (14)

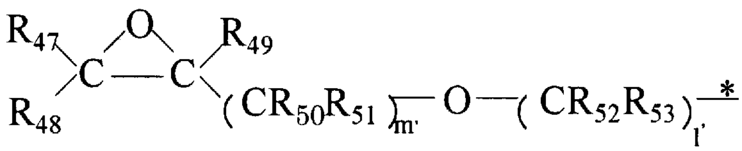

Formula (15)

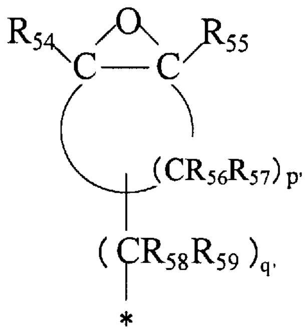

Formula (16)

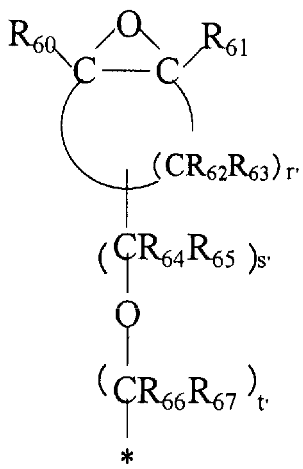

In the formulas (13) to (16), $R_{42}$ to $R_{44}$, $R_{47}$ to $R_{49}$, $R_{54}$. $R_{55}$, $R_{60}$ and $R_{61}$ each independently represent a hydrogen atom, an alkyl group having 1 to 4 carbon atom(s), a hydroxyl group, a carboxyl group or an amino group; $R_{45}$, $R_{46}$, $R_{50}$ to $R_{53}$, $R_{58}$, $R_{59}$ and $R_{64}$ to $R_{67}$ each independently represent a hydrogen atom or an alkyl group having 1 to 4 carbon atom(s); $R_{56}$, $R_{57}$, $R_{62}$ and $R_{63}$ each independently represent a hydrogen atom, an alkoxyl group having 1 to 4 carbon atom(s) or an alkyl group having 1 to 4 carbon atom(s); n', m', l', q', s' and t' each independently represent an integer of 1 to 8, and p' and r' each independently represent an integer of 4 to 12; and an asterisk * represents the

position of bonding with the silicon atom in the formula (11).

The high-molecular compound in the present invention may preferably be a cross-linked product of the hydrolyzable compounds represented by the formulas (11) and (12) with a hydrolyzable compound represented by the following formula (17). In this case, the solubility of the formulas (11) and (12) compounds in the stage of synthesis, the coating performance of a surface layer coating solution and the electrical properties as the physical properties of a film having been cured can be improved, which situation is preferable. In particular, a case in which $R_{68}$ is an alkyl group is preferable as improving the solubility and coating performance. A case in which $R_{68}$ is a phenyl group is also preferable as being contributory to an improvement in the electrical properties, in particular, volume resistivity.

Formula (17) $R_{68}\text{-Si}(OR_{69})(OR_{70})(OR_{71})$

In the formula (17), $R_{68}$ represents an alkyl group or an aryl group, and $R_{69}$ to $R_{71}$ each independently represent a hydrocarbon group.

The charging member according to the present invention may be produced by forming on the peripheral surface of the elastic layer a coating film of a coating material containing the above hydrolyzed condensate, and thereafter subjecting the hydrolyzed condensate contained in the coating film, to cross-linking to form the above high-molecular compound therein to make the resultant film serve as the surface layer.

(Production example of high-molecular compound)

Here, as a production example of the high-molecular compound, how to prepare a surface layer coating medium (coating material) and how to form the high-molecular compound on the elastic layer to obtain the surface layer are specifically described. The high-molecular compound is produced through the following step (1) to step (6). In the following, a component (A) is the hydrolyzable silane compound represented by the formula (11), a component (B) is the hydrolyzable silane compound represented by the formula (17) and a component (C) is the hydrolyzable niobium compound represented by the formula (12).

(1): The step of adjusting the molar ratio of components (A), (B) and (C), (C)/[(A)+(B)], to from 0.1 or more to 12.5 or less;
(2): the step of mixing the components (A) and (B), and then adding to the resultant mixture a component-(D) water and a component-(E) alcohol, followed by heating and reflux to effect hydrolysis condensation;
(3): the step of adding the component (C) to a solution obtained by effecting the hydrolysis condensation, to effect hydrolysis condensation;
(4): the step of adding a component-(F) photopolymerization initiator, and then diluting the resultant mixture with an alcohol to obtain a coating medium (coating material) containing a hydrolyzed condensate;
(5): the step of applying the coating medium onto the peripheral surface of the elastic layer formed on the substrate; and
(6): the step of subjecting the hydrolyzed condensate to cross-linking reaction to cure the coating medium.

Incidentally, the components (A), (B) and (C) may simultaneously be added in the step (2). Also, as to the hydrolyzable silane compounds, only one type may be used as the component (A), or two or more types of the component (A) and two or more types of the component (B) may be used in combination.

The $R_{34}$ to $R_{36}$ hydrocarbon groups in the formula (11) may include, e.g., alkyl groups, alkenyl groups and aryl groups. Of these, straight-chain or branched-chain alkyl groups each having 1 to 4 carbon atom(s) are preferred, and further a methyl group, an ethyl group, a n-propyl group, an i-propyl group, a n-butyl group and a t-butyl group are much preferred.

Specific examples of the hydrolyzable silane compound having the structure represented by the formula (11) are shown below: 4-(1,2-Epoxybutyl)trimethoxysilane, 5,6-epoxyhexyltriethoxysilane, 8-oxirane-2-yl octyltrimethoxysilane, 8-oxirane-2-yl octyltriethoxysilane, 3-glycidoxypropyltrimethoxysilane, 3-glycidoxypropyltriethoxysilane, 1-(3,4-epoxycyclohexyl)ethyltrimethoxysilane, 1-(3,4-epoxycyclohexyl)ethyltriethoxysilane, 3-(3,4-epoxycyclohexyl)methyloxypropyltrimethoxysilane and 3-(3,4-epoxycyclohexyl)methyloxypropyltriethoxysilane.

As the $R_{68}$ alkyl group in the formula (17), a straight-chain alkyl group having 1 to 21 carbon atom(s) is preferred, and one having 6 to 10 carbon atom is further preferred. As the $R_{68}$ aryl group, a phenyl group is preferred. The $R_{69}$ to $R_{71}$ each hydrocarbon group may include, e.g., alkyl groups, alkenyl groups and aryl groups. Of these, straight-chain or branched-chain alkyl groups having 1 to 4 carbon atom(s) are preferred, and further a methyl group, an ethyl group, a n-propyl group, an i-propyl group, a n-butyl group and a t-butyl group are much preferred.

Specific examples of the hydrolyzable silane compound having the structure represented by the formula (17) are shown below: Methyltrimethoxysilane, methyltriethoxysilane, methyltripropoxysilane, ethyltrimethoxysilane, ethyltriethoxysilane, ethyltripropoxysilane, propyltrimethoxysilane, propyltriethoxysilane, propyltripropoxysilane, hexyltrimethoxysilane, hexyltriethoxysilane, hexyltripropoxysilane, decyltrimethoxysilane, decyltriethoxysilane, decyltripropoxysilane, phenyltrimethoxysilane, phenyltriethoxysilane and phenyltripropoxysilane.

Where the hydrolyzable silane compound having the structure represented by the formula (17) is used in combination and $R_{68}$ has a phenyl group, it may much preferably be used in combination with a hydrolyzable silane compound in which $R_{68}$ has a straight-chain alkyl group having 6 to 10 carbon atoms. Its use in combination makes the compounds improved in compatibility with the solvent even when their structures change through the hydrolysis condensation reaction.

The $R_{37}$ to $R_{41}$ hydrocarbon groups in the formula (12) may include, e.g., alkyl groups, alkenyl groups and aryl groups. Of these, straight-chain or branched-chain alkyl groups each having 1 to 4 carbon atom(s) are preferred, and further a methyl group, an ethyl group, a n-propyl group, an i-propyl group, a n-butyl group and a t-butyl group are much preferred.

Specific examples of the hydrolyzable niobium compound having the structure represented by the formula (12) are shown below: Niobium methoxide, niobium ethoxide, niobium n-propoxide, niobium i-propoxide, niobium n-butoxide, niobium i-butoxide, niobium sec-butoxide, and niobium t-butoxide.

The molar ratio of the components (A), (B) and (C), Nb/Si, may preferably be adjusted to from 0.1 or more to 12.5 or less, and much preferably from 0.5 or more to 10.0 or less. As long as it is 0.1 or more, the charging member can be more improved in its charging ability, and can be more highly effective in keeping the multi-color ghost images from occurring. Inasmuch as it is 12.5 or less, the surface layer forming coating solution can have stable coating performance and storage properties.

As to the amount of the component-(D) water to be added, it may preferably be from 0.3 or more to 6.0 or less as the value of (D)/[(A)+(B)], based on the number of moles of the components (A) and (B). It may much preferably be from 1.2 or more to 1.8 or less. As long as it is 0.3 or more, the condensation may sufficiently proceed, and there can not easily remain any unreacted residual monomers, promising good film-forming properties. A system where any monomers do not remain is desirable also from the viewpoint of effective use of raw materials. Also, as long as it is 6.0 or less, the condensation may by no means proceed too rapidly, and the condensate can be prevented from becoming milky or precipitating. In addition, the condensate may by no means contain too much water and hence may by no means be of too high polarity, so that this promises a good compatibility when the condensate is mixed with water and an alcohol, and hence the condensate can be prevented from becoming milky or precipitating.

As the component-(E) alcohol, it is preferable to use a primary alcohol, a secondary alcohol, a tertiary alcohol, a mixed system of a primary alcohol and a secondary alcohol, or a mixed system of a primary alcohol and a tertiary alcohol. It is particularly preferable to use ethanol, a mixed solvent of methanol and 2-butanol, a mixed solvent of ethanol and 2-butanol, or a mixed solvent of ethanol, 2-butanol and 1-butanol.

As the component-(F) photopolymerization initiator, it is preferable to use an onium salt of Lewis acid or Brφnsted acid. Other cationic polymerization initiator may include, e.g., borate salts, compounds having an imide structure, compounds having a triazine structure, azo compounds, and peroxides. The photopolymerization initiator may preferably beforehand be diluted with a solvent such as an alcohol or a ketone so as to be improved in compatibility with the coating medium.

Among such various cationic polymerization initiators, an aromatic sulfonium salt or an aromatic iodonium salt is preferred from the viewpoint of sensitivity, stability and reactivity. In particular, a bis(4-tert-butylphenyl) iodonium salt, a compound having a structure represented by the following formula (18) (trade name: ADECAOPTOMER SP150; available from ADEKA Corporation) and a compound having a structure represented by the following formula (19) (trade name: IRGACURE 261; available from Ciba Specialty Chemicals Inc.) are preferred.

Formula (18)

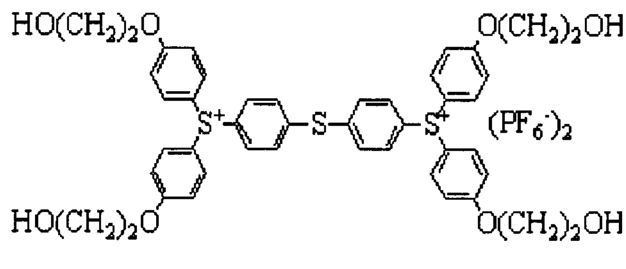

Formula (19)

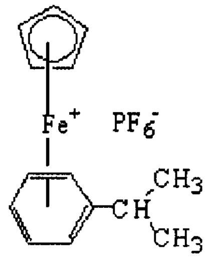

The coating medium synthesized as above is controlled to have a concentration suited for its actual coating. On this occasion, besides the hydrolyzed condensate, any suitable solvent may be used in order to improve coating performance. Such a solvent may include, e.g., alcohols such as methanol, ethanol and 2-butanol, ethyl acetate, and ketones such as methyl ethyl ketone and methyl isobutyl ketone, or a mixture of any of these. In particular, ethanol or a mixed solvent of 2-butanol and 1-butanol is preferred.

(Formation of surface layer)

The coating medium having been prepared in this way is coated on the elastic layer by a method such as coating making use of a roll coater, dip coating or ring coating, to form a coating layer. The coating layer is irradiated with activated-energy rays, whereupon cationic-polymerizable epoxy groups in the hydrolyzed condensate contained in the coating medium undergo cleavage and polymerization. This causes molecules of the hydrolyzed condensate to cross-link with one another to come cured, thus the surface layer is formed. As the activated-energy rays, ultraviolet rays are preferred.

The curing of the surface layer with ultraviolet rays makes any excess heat not easily generated, and any phase separation that may come during volatilization of a solvent as in heat curing can not easily occur, thus a uniform film is obtained. This enables the photosensitive member to be provided with uniform and stable potential. Also, as long as the cross-linking reaction is carried out by ultraviolet radiation, the conductive elastic layer can be kept from its deterioration due to heat history, and hence the elastic layer can also be kept from lowering in its electrical properties.

In the irradiation with ultraviolet rays, usable are a high-pressure mercury lamp, a metal halide lamp, a low-pressure mercury lamp, an excimer UV lamp. Of these, an ultraviolet radiation source may be used which is rich in light of from 150 nm or more to 480 nm or less in wavelength of ultraviolet rays.

Here, integral light quantity of ultraviolet radiation is defined as shown below.

$$\text{Ultraviolet radiation integral light quantity (mJ/cm}^2\text{)} = \text{ultraviolet radiation intensity (mW/cm}^2\text{)} \times \text{irradiation time (s)}.$$

The integral light quantity of ultraviolet radiation may be controlled by selecting irradiation time, lamp output, and distance between the lamp and the irradiation object. The integral light quantity may also be sloped within the irradiation time.

Where the low-pressure mercury lamp is used, the integral light quantity of ultraviolet radiation may be measured with an ultraviolet radiation integral light quantity meter UIT-150-A or UVD-S254 (both are trade names), manufactured by Ushio Inc. Where the excimer UV lamp is used, the integral light quantity of the ultraviolet radiation may also be measured with an ultraviolet radiation integral light quantity meter UIT-150-A or VUV-S172 (both are trade names), manufactured by Ushio Inc.

A specific example of the cross-linking and curing reaction is shown in Fig. 6. That is, a condensate formed by using 3-glycidoxypropyltrimethoxysilane as the component (A) described previously and also hydrolyzing the components (B) and (C) has epoxy groups (glycidoxypropyl groups) as cationic-polymerizable groups. The epoxy groups of such a hydrolyzed condensate undergo ring-opening of epoxy rings in the presence of a cationic polymerization catalyst (represented as $R^+X^-$ in Fig. 6), and the polymerization proceeds chain-reactingly. As the result, polysiloxanes containing $NibO_{5/2}$ and $SiO_{3/2}$ cross-link with one another to come cured, thus the surface layer according to the present invention is formed. In Fig. 6, n represents an integer of 1 or more.

The surface layer may preferably have a layer thickness of approximately from 10 nm to 400 nm, and particularly

preferably from 50 nm to 350 nm, from the viewpoint of charging performance and, when having the elastic layer, keeping the low-molecular weight components from bleeding out of the elastic layer.

(Electrophotographic apparatus & process cartridge)

The electrophotographic apparatus according to the present invention has an electrophotographic photosensitive member and a charging member disposed in contact with the electrophotographic photosensitive member, where, as the charging member, the charging member according to the present invention is used. Also, the process cartridge according to the present invention is a process cartridge characterized by having an electrophotographic photosensitive member and a charging member disposed in contact with the electrophotographic photosensitive member and being so set up as to be detachably mountable to the main body of an electrophotographic apparatus, where, as the charging member, the charging member according to the present invention is used.

How the electrophotographic apparatus and process cartridge in which the charging member of the present invention is used as a charging roller are set up is schematically described with reference to Fig. 2. Photosensitive drums 1a to 1d set opposite to developing means 4a to 4d, respectively, such as developing assemblies holding respective-color toners therein are provided in a line in the direction of movement of an intermediate transfer belt 6. Respective-color toner images formed on the respective photosensitive drums by the respective developing means are sequentially superimposingly transferred electrostatically onto the intermediate transfer belt by means of transfer rollers 7a to 7d, so that a full-color toner image composed of four-color toners of yellow, magenta and cyan and black added thereto is formed thereon. Charging means 2a to 2d, exposure means 3a to 3d and developing means 4a to 4d which are for forming the respective-color toner images on the respective photosensitive drums are also provided around the respective photosensitive drums 1a to 1d. Cleaning units 5a to 5d are further provided which have cleaning blades with which any toners remaining on the respective photosensitive drums are collected by rubbing, after the toner images have been transferred to the intermediate transfer belt.

How image formation is operated is described next. The surfaces of the photosensitive drums 1a to 1d having uniformly electrostatically been charged by means of charging rollers which are the charging means 2a to 2d are irradiated by the exposure means 3a to 3d, with laser beams modulated in accordance with image data sent from a host processing unit such as a personal computer, and the desired electrostatic latent images corresponding to the respective colors are obtained. These latent images are reverse-developed at developing positions by means of the developing means 4a to 4d which are the developing assemblies holding respective-color toners therein, and are rendered visible as the toner images. These toner images are sequentially transferred at the respective transfer positions to the intermediate transfer belt 6, and then transferred in block to a transfer material P which is fed at a stated timing by a paper feed means (not shown) and come transported by a transport means. The full-color toner image on this transfer material P is fused by heating by means of a fixing assembly (not shown) and permanently fixed on the transfer medium, thus the desired full-color print image is obtained.

In an electrophotographic-system color image forming apparatus, the apparatus is also so set up that, not only the full-color mode that forms full-color toner images by using four-color toners, but also a monochrome mode that forms black-and-white images by using only the photosensitive drum for black toner can be chosen and can be switched from the former.

To describe the matter in greater detail, electrophotographic photosensitive members (the photosensitive drums) are rotatingly driven clockwise as shown by arrows and at a stated peripheral speed (process speed). The process speed is variable. As the electrophotographic photosensitive members, any known electrophotographic photosensitive members may be employed which, e.g., each have a cylindrical support having an electrical conductivity and provided on the support a photosensitive layer containing an inorganic photosensitive material or organic photosensitive material. Also, the electrophotographic photosensitive members may each further have a charge injection layer for charging the surface of the former to stated polarity and potential.

Charging rollers that are the charging members (charging means) are kept in contact with the electrophotographic photosensitive members at a stated pressing force and, in the present apparatus, rotatingly driven in the direction that follows the rotation of the electrophotographic photosensitive members. To the charging rollers each, only a stated DC voltage is applied from a charging bias applying power source, whereby the surfaces of the electrophotographic photosensitive members are uniformly charge-processed to stated polarity and potential.

As the exposure means, any known means may be used, which may include, e.g., laser beam scanners. The charge-processed surfaces of the electrophotographic photosensitive members are put to imagewise exposure corresponding to the intended image information, by means of the exposure means, whereupon the potential at exposed light areas of the charge-processed surfaces of the electrophotographic photosensitive members lowers (attenuates) selectively, so that the electrostatic latent images are formed on the electrophotographic photosensitive members.

As the developing means, any known means may be used. For example, the developing means in this example are each so set up as to have a toner carrying member which carries and transporting each toner, provided at an opening

of a developer container holding the toner therein, an agitator which agitates the toner held in the container, and a toner coat control member which controls toner coat level (toner layer thickness) on the toner carrying member.

The developing means make the toners adhere selectively to the exposed light areas of the electrostatic latent images on the surfaces of the electrophotographic photosensitive members to render the electrostatic latent images visible as the toner images; the toners (negatively chargeable toners) standing charged to the same polarity as that of charge polarity of the electrophotographic photosensitive members. As a developing system therefor, there are no particular limitations thereon, and any existing system may be used. As the existing system, a jumping developing system, a contact developing system, a magnetic-brush developing system is available. In particular, in the full-color electrophotographic apparatus that reproduces full-color toner images, the contact developing system is preferable for the purpose of, e.g., remedying the disposition of toner scattering. As a toner carrying member used in the contact developing system, it may preferably make use of a compound having elasticity, such as rubber, in view of the securing of contact stability. For example, it may include a developing roller comprising a support made of a metal and, provided thereon, an elastic layer to which electrical conductivity has been imparted. For this elastic layer, a foam obtained by expansion molding of a resilient material may be used as an elastic material. The elastic layer may further be provided thereon with a layer or may be subjected to surface treatment. The surface treatment may include surface processing making use of ultraviolet rays or electron rays, and surface modification in which a compound is made to adhere to the surface or impregnated into the surface layer.

As the intermediate transfer belt, any known means may be used, which may be exemplified by a conductive belt made from a resin and an elastomer in which conductive fine particles have been incorporated so as to be controlled to have a medium resistance.

As the transfer rollers as transfer means, any known means may be used, which may be exemplified by transfer rollers each comprising a support made of a metal and covered thereon an elastic resin layer having been controlled to have a medium resistance. The transfer rollers are brought into contact with the electrophotographic photosensitive members each at a stated pressing force, interposing the intermediate transfer belt between them, so as to be kept to form transfer nips between them, and are rotated at substantially the same peripheral speed as the rotational peripheral speed of the electrophotographic photosensitive members in the direction following the rotation of the electrophotographic photosensitive members. A transfer voltage having a polarity reverse to the charge characteristics of each toner is also applied thereto from a transfer bias applying power source.

Residues such as transfer residual toner are collected from the surfaces of the electrophotographic photosensitive members by cleaning means of a blade type. Thereafter, the electrophotographic photosensitive members are again electrostatically charged by means of the charging rollers to form images repeatedly thereon.

The electrophotographic apparatus of this example may be an apparatus having a process cartridge (not shown) in which each electrophotographic photosensitive member and each charging roller are integrally supported with a support member such as a resin molded product and which is so set up as to be detachably mountable to the main body of the electrophotographic apparatus as it is so integrally set up. It may further be a process cartridge in which, not only the electrophotographic photosensitive member and the charging roller, the developing means and the cleaning means are also integrally supported together.

## EXAMPLES

The present invention is described below in greater detail by giving working examples. In the following working examples, "part(s)" refers to "part(s) by mass".

(1) Formation & Evaluation of Conductive Elastic Layer Materials shown in Table 1 were mixed by means of a 6-liter pressure kneader (equipment used: TD6-15MDX; manufactured by Toshin Co., Ltd.) for 24 minutes in a packing of 70 vol.% and at a number of blade revolutions of 30 rpm to obtain an unvulcanized rubber composition. To 174 parts by mass of this unvulcanized rubber composition, 4.5 parts of tetrabenzylthiuram disulfide (trade name: SANCELER TBzTD; available from Sanshin Chemical Industry Co., Ltd.) as a vulcanization accelerator and 1.2 parts of sulfur as a vulcanizing agent were added. Then, these were mixed by means of an open roll of 12 inches in roll diameter at a number of front-roll revolutions of 8 rpm and a number of back-roll revolutions of 10 rpm and at a roll gap of 2 mm, carrying out right and left 20 cuts in total. Thereafter, the roll gap was changed to 0.5 mm to carry out tailing 10 times to obtain a kneaded product 1 for elastic layer.

[Table 1]

| Raw materials | Amount |
|---|---|
| Medium/high-nitrile NBR (trade name: NIPOL DN219; bound acrylonitrile content center value: 33.5%; Mooney viscosity center value: 27; available from Nippon Zeon Co., Ltd.) | 100 parts |

(continued)

| Raw materials | Amount |
|---|---|
| Carbon black for color (filler) (trade name: #7360SB; particle diameter: 28 nm; nitrogen adsorption specific surface area: 77 $m^2/g$; DBP oil absorption: 87 $cm^3/100$ g; available from Tokai Carbon Co., Ltd.) | 48 parts |
| Calcium carbonate (filler) (trade name: NANOX #30; available from Maruo Calcium Co., Ltd.) | 20 parts |
| Zinc oxide | 5 parts |
| Zinc stearate | 1 part |

Next, a substrate made of steel (one having been surface-plated with nickel; hereinafter "mandrel") in a columnar shape of 6 mm in diameter and 252 mm in length was readied. Then, this mandrel was coated with a metal- and rubber-containing heat-hardening adhesive (trade name: METALOC U-20, available from Toyokagaku Kenkyusho Co., Ltd.) over the former's regions up to 115.5 mm from the both sides interposing the middle of the column surface in the axial direction (regions of 231 mm in total in width in the axial direction). The wet coating thus formed was dried at 80°C for 30 minutes, and thereafter further dried at 120°C for 1 hour.

The kneaded product 1 was extruded simultaneously with the above mandrel with adhesive layer while being shaped coaxially around the mandrel and in the shape of a cylinder of 8.75 mm to 8.90 mm in diameter, by extrusion making use of a cross head. The extruded product obtained was cut at its end portions to produce a conductive elastic roller the mandrel of which was laminated on the outer periphery thereof with an unvulcanized conductive elastic layer. As an extruder, an extruder having a cylinder diameter of 70 mm and an L/D of 20 was used, making temperature control to 90°C for its head, cylinder and screw at the time of extrusion.

Next, the above roller was vulcanized by using a continuous heating oven having two zones set at different temperatures. A first zone was set at a temperature of 80°C, where the roller was passed therethrough in 30 minutes, and a second zone was set at a temperature of 160°C and the roller was passed therethrough also in 30 minutes, to obtain a vulcanized conductive elastic roller.

Next, this conductive elastic roller was cut at its both ends of the conductive elastic layer portion (rubber portion) to make the conductive elastic layer portion have a width of 232 mm in the axial direction. Thereafter, the surface of the conductive elastic layer portion was sanded with a rotary grinding wheel (number of work revolutions: 333 rpm; number of grinding wheel revolutions: 2,080 rpm; sanding time: 12 seconds). Thus, a conductive elastic roller 1 (conductive elastic roller having been surface-sanded) was obtained which had a crown shape of 8.26 mm in diameter at end portions and 8.50 mm in diameter at the middle portion, having a surface ten-point average roughness Rz of 5.5 μm and having a run-out of 18 μm.

The ten-point average roughness Rz was measured according to JIS B 6101. The run-out was measured with a high-precision laser measuring instrument LSM-430V, manufactured by Mitutoyo Corporation. Stated in detail, the outer diameter was measured with the measuring instrument, and the difference between a maximum outer diameter value and a minimum outer diameter value was regarded as outer-diameter difference run-out. This measurement was made at five spots, and an average value of outer-diameter difference run-out at five spots was regarded as the run-out of the measuring object.

(2) Synthesis & Evaluation of Condensate

(2-1) Preparation of Condensate 1

Next, a condensate 1 was synthesized through the following two-stage reaction.

Synthesis 1: First-Stage Reaction

Materials shown in Table 2 below were mixed, and thereafter stirred at room temperature for 30 minutes. Subsequently, heating and reflux were carried out at 120°C for 20 hours by using an oil bath, to obtain a condensate intermediate 1 of the hydrolyzable silane compounds. The condensate intermediate 1 at this stage was 28.0% by mass as solid content (the mass ratio to solution total mass when the hydrolyzable compounds were assumed to have undergone dehydration condensation in their entirety).

[Table 2]

| Raw materials | Amount |
|---|---|
| Glycidoxypropyltrimethoxysilane (GPTMS, simply "EP-1") (hydrolyzable silane compound; trade name: KBM-403; available from Shin-Etsu Chemical Co., Ltd.) | 11.76 g (0.049 mol) |
| Hexyltrimethoxysilane (HeTMS, simply "He") (hydrolyzable silane compound; trade name: KBM-3063; available from Shin-Etsu Chemical Co., Ltd.) | 62.49 g (0.302 mol) |
| Ion-exchanged water | 11.39 g |
| Ethanol (guaranteed; available from Kishida Chemical Co., Ltd.) | 91.17 g |

[Table 3]

| Abbr. symbol | Name | Structure | Maker | Trade name |
|---|---|---|---|---|
| EP-1 | 3-glycidoxy-propyltri-methoxy-silane | 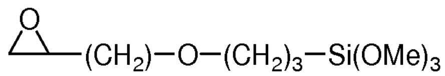 | Shin-Etsu Chemical Co. | KBM-403 |
| EP-2 | 3-glycidoxy-propyltriethoxysilane | 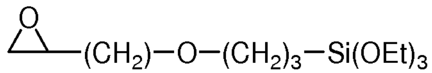 | Shin-Etsu Chemical Co. | KBE-403 |
| EP-3 | 4-(trimethoxysilyl) butane-1,2-epoxide | 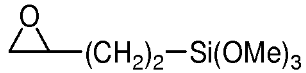 | SiKEMIA Co. | |
| EP-4 | 8-oxirane-2-yl octyl-trimethoxysilane | 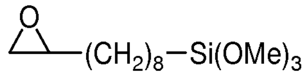 | SiKEMIA Co. | |
| EP-5 | 2-(3,4-epoxycyclo-hexyl)ethyl-trimethoxysilane | 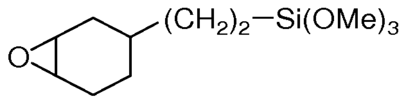 | Shin-Etsu Chemical Co. | KBM-303 |
| He | Hexyltri-methoxy-silane | $H_3C-(CH_2)_5-Si(OMe)_3$ | Shin-Etsu Chemical Co. | KBM-3063 |
| Ph | Phenyltri-methoxy-silane | 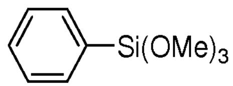 | Shin-Etsu Chemical Co. | KBM-103 |
| Nb-1 | Niobium ethoxide | $Nb-(OEt)_5$ | Gelest, Inc. | |
| Nb-2 | Niobium-n-butoxide | $Nb-(OnBu)_5$ | Gelest, Inc. | |

Synthesis 2: Second-Stage Reaction

Next, to 45.37 g of the condensate intermediate 1, 28.63 g (0.090 mol) of niobium ethoxide (Nb-1) (available from Gelest, Inc.) was added, and these were stirred at room temperature for 3 hours to obtain a condensate 1. A sequence of stirring was carried out at a speed of 750 rpm. The number ratio of atoms Nb/Si was 1.0.

Evaluation (1): Stability of condensate 1

The stability of the condensate 1 was evaluated according to the following evaluation criteria.
A: The condensate stands neither milky nor precipitating even after its leaving for a month.
B: The condensate comes to stand a little milky after its leaving for about two weeks.
C: The condensate comes to stand a little milky after its leaving for about one week.
D: The condensate comes to stand milky or precipitating during its synthesis.

Evaluation (2): Confirmation of structure of formula (1) in cured film of condensate 1

Next, it was confirmed by $^{29}$Si-NMR and $^{13}$C-NMR measurement whether or not the structure represented by the formula (1) was present in the cured product of the condensate 1 (instrument used: JMN-EX400, manufactured by JEOL Ltd.). How to prepare a sample for the measurement is as described below.
First, an aromatic sulfonium salt (trade name:

ADECAOPTOMER SP150; available from ADEKA Corporation) as a cationic photopolymerization initiator was so diluted with methanol as to be 10% by mass. Then, 0.7 g of the methanol dilute solution of the cationic polymerization initiator was added to 25 g of the condensate 1. This is called a "mixture of condensate 1 and photopolymerization initiator". To this "mixture of condensate 1 and photopolymerization initiator", a 1:1 (mass ratio) mixed solvent of ethanol and 2-butanol was added to regulate the former to have a theoretical solid content of 7.0% by mass, to obtain a coating solution No. 1.

Next, the coating solution No. 1 was spin-coated on the surface of a sheet (thickness: 100 μm) made of aluminum, having been surface-degreased. As a spin coating equipment, 1H-D7 (trade name; manufactured by Mikasa Co., Ltd.) was used. The spin coating was carried out under conditions of a number of revolutions of 300 rpm and a revolution time of 2 seconds.
Then, the wet coating of the coating solution No. 1 was dried, and thereafter the coating film formed was irradiated with ultraviolet rays of 254 nm in wavelength to cure the coating film. The ultraviolet rays with which the coating film was irradiated were in an integral light quantity of 9,000 mJ/cm$^2$. In the irradiation with ultraviolet rays, a low-pressure mercury lamp (manufactured by Harison Toshiba Lighting Corporation) was used. The cured film formed was peeled from the sheet made of aluminum, and then pulverized by using a mortar made of agate, to prepare the sample for NMR measurement. This sample was measured for its $^{29}$Si-NMR spectrum and $^{13}$C-NMR spectrum by using a nuclear magnetic resonance instrument (trade name; JMN-EX400, manufactured by JEOL Ltd.).
A $^{29}$Si-NMR spectrum is shown in Fig. 3. In the same figure, peaks formed by waveform separation of the spectrum are shown together. A peak in the vicinities of -64 ppm to -74 ppm shows a T3 component. Here, the T3 component shows a state in which the Si having one bond with an organic functional group has three bonds with the other atoms (Si and Nb) through the O, i.e., - $SiO_{3/2}$. It was confirmed from Fig. 3 that there was a species present in the state of -$SiO_{3/2}$ upon condensation of a hydrolyzable silane compound having organic chains containing epoxy groups.
A $^{13}$C-NMR spectrum is also shown in Fig. 4. Peaks showing epoxy groups before ring-opening appear in the vicinities of 44 ppm and 51 ppm, and peaks after ring-opening polymerization appear in the vicinities of 69 ppm and 72 ppm. It was confirmed from Fig. 4 that the polymerization was effected almost without any ring-unopened epoxy groups remaining.
It was confirmed from the above $^{29}$Si-NMR measurement and $^{13}$C-NMR measurement that the cured product of the condensate 1 had the structure represented by the formula (1).

(2-2) Preparation of Condensates 2 to 16

(1) Preparation of condensate intermediates 2 to 9 Condensate intermediates 2 to 9 were prepared in the same way as the condensate intermediate 1 in Example 1 except that they were composed as shown in Table 4 below. Here, symbols "EP-1", "EP-2", "EP-3", "EP-4", "EP-5", "He" and "Ph" in the columns of the components (A) and (B) in Table 4 represent the hydrolyzable silane compounds shown in Table 3 above.

[Table 4]

| Condensate intermediate | | | | | | | | | |
|---|---|---|---|---|---|---|---|---|---|
| No. | Component (A) | | | | | Component(B) | | $H_2O$ (g) | EtOH (g) |
| | EP-1 (g) | EP-2 (g) | EP-3 (g) | EP-4 (g) | EP-5 (g) | He (g) | Ph (g) | | |
| 1 | 11.76 | - | - | - | - | 92.49 | - | 11.39 | 91.17 |
| 2 | 71.02 | - | - | - | - | - | - | 9.63 | 96.15 |
| 3 | 39.02 | - | - | - | - | 33.75 | - | 10.58 | 93.46 |
| 4 | 11.96 | - | - | - | - | 41.39 | 21.40 | 11.59 | 90.46 |
| 5 | - | 13.78 | - | - | - | 62.49 | - | 11.39 | 89.14 |
| 6 | - | - | 9.95 | - | - | 65.34 | - | 11.91 | 89.60 |
| 7 | - | - | - | 13.16 | - | 60.10 | - | 10.95 | 92.58 |
| 8 | - | - | - | - | 12.08 | 61.87 | - | 11.28 | 91.57 |
| 9 | 5.85 | - | - | - | 6.07 | 62.18 | - | 11.33 | 91.37 |

(2) Preparation of condensates 2 to 16 Condensates 2 to 16 were prepared in the same way as the condensate 1 in Example 1 except that they were composed as shown in Table 5 below. These condensates were put to evaluations (1) and (2). Here, abbreviation symbols "Nb-1" and "Nb-2" in the columns of the component (C) in Table 5 respectively represent the hydrolyzable niobium compounds shown in Table 3 above. The results of Evaluations (1) and (2) on the condensates 1 to 16 are shown in Table 6.

[Table 5]

| Condensate No. | Condensate intermediate | | Component (C) | | Nb/Si |
|---|---|---|---|---|---|
| | No. | Amount (g) | Type | Amount (g) | |
| 1 | 1 | 45.37 | Nb-1 | 28.63 | 1.00 |
| 2 | 1 | 8.33 | Nb-1 | 65.67 | 12.50 |
| 3 | 1 | 69.61 | Nb-1 | 4.39 | 0.10 |
| 4 | 1 | 10.12 | Nb-1 | 63.88 | 10.00 |
| 5 | 1 | 56.02 | Nb-1 | 17.98 | 0.50 |
| 6 | 1 | 8.05 | Nb-1 | 65.95 | 13.00 |
| 7 | 1 | 71.70 | Nb-1 | 2.30 | 0.05 |
| 8 | 2 | 48.25 | Nb-1 | 25.75 | 1.00 |
| 9 | 3 | 46.65 | Nb-1 | 27.35 | 1.00 |
| 10 | 4 | 45.07 | Nb-1 | 28.93 | 1.00 |
| 11 | 1 | 45.37 | Nb-2 | 41.22 | 1.00 |
| 12 | 5 | 45.37 | Nb-1 | 28.63 | 1.00 |
| 13 | 6 | 44.58 | Nb-1 | 29.42 | 1.00 |
| 14 | 7 | 46.05 | Nb-1 | 27.95 | 1.00 |
| 15 | 8 | 45.54 | Nb-1 | 28.46 | 1.00 |
| 16 | 9 | 45.46 | Nb-1 | 28.45 | 1.00 |

[Table 6]

| Condensate No. | Evaluation (1) | Evaluation (2) |
|---|---|---|
| | | Presence of formula-(1) structure |
| 1 | A | Yes |
| 2 | A | Yes |
| 3 | A | Yes |
| 4 | A | Yes |
| 5 | A | Yes |
| 6 | A | Yes |
| 7 | A | Yes |
| 8 | A | Yes |
| 9 | A | Yes |
| 10 | A | Yes |
| 11 | A | Yes |
| 12 | A | Yes |
| 13 | A | Yes |
| 14 | A | Yes |
| 15 | A | Yes |
| 16 | A | Yes |

(Example 1)

(3) Production & Evaluation of Charging Roller 1

(3-1) Preparation of surface layer forming coating materials 1-1 to 1-7

An aromatic sulfonium salt (trade name: ADECAOPTOMER SP150; available from ADEKA Corporation) as a cationic photopolymerization initiator was so diluted with methanol as to be 10% by mass.

Using a 1:1 (mass ratio) mixed solvent of ethanol and 2-butanol, the condensate 1 was so diluted as to have a solid-matter concentration of 1% by mass, 0.05% by mass, 0.1% by mass, 0.5% by mass, 3.5% by mass, 4% by mass and 4.5% by mass each. Then, to each dilute solution, the dilute solution of the above cationic photopolymerization initiator was so added as to be in a liquid content of 3.0 parts by mass based on 100 parts by mass of the solid matter of the condensate 1 to prepare surface layer forming coating materials 1-1 to 1-7, respectively.

Next, about the conductive elastic roller 1 produced in the above (1) (the conductive elastic roller having been surface-sanded), seven rollers were readied and these conductive elastic rollers 1 were respectively coated, on their peripheral surfaces of the conductive elastic layers, with the surface layer forming coating materials 1-1 to 1-7 by ring coating (ejection rate: 0.120 mL/s; speed of ring head: 85 mm/s; total delivery: 0.130 mL). The coatings thus formed were each irradiated with ultraviolet rays of 254 nm in wavelength in such a way as to be in an integral light quantity of 9,000 mJ/cm$^2$) to cure the coatings (curing by cross-linking reaction) to form surface layers. In the irradiation with ultraviolet rays, a low-pressure mercury lamp (manufactured by Harison Toshiba Lighting Corporation) was used. Thus, charging rollers 1-1 to 1-7 were obtained. The charging rollers 1 obtained were put to the following evaluations (3) to (7).

Evaluation (3): Coating performance

The external appearance of the surface of the charging rollers 1 each was visually observed to make evaluation according to the criteria shown in Table 7.

[Table 7]

| Rank | Criteria |
|---|---|
| A | No faulty coating is seen at all on the surface of the charging roller. |
| B | Faulty coating has occurred on some part of the surface of the charging roller. |
| C | Faulty coating has occurred on the whole area of the surface of the charging roller. |

Evaluation (4): Measurement of thickness of surface layer

A section made by cutting the charging rollers 1 each was measured with a scanning transmission electron microscope (trade name: HD-2000; manufactured by Hitachi High-Technologies Corporation).

Evaluation (5): Identification of Si-O-Nb linkage The presence of the Si-O-Nb linkage in the surface layer of charging rollers 1 each was identified by ESCA (instrument used: QUANTUM 2000, manufactured by Ulvac-Phi, Inc.). More specifically, the charging roller surface was so made as to be irradiated with X-rays to evaluate the manner of linkage in the surface layer. From an O1s spectrum detected, the presence of the Si-O-Nb linkage in the surface layer of each charging roller was identified.

Evaluation (6): Measurement of surface potential of photosensitive drum

The charging ability of each charging roller 1 was evaluated in the following way.

That is, as an electrophotographic image forming apparatus having the construction shown in Fig. 5, a laser beam printer (trade name: LBP7200; manufactured by CANON INC.) was readied. Then, the number of revolutions of its photosensitive drum was so changed as to be adaptable to cases where the process speed was 73.5 mm/sec (low-speed processing), 115.5 mm/sec (medium-speed processing) and 173.5 mm/sec (high-speed processing) each, and the surface potential of the photosensitive drum at each number of revolutions was measured with a surface potentiometer 10.

Here, the photosensitive drum was charged by applying 1,000 V as a charging bias from a charging bias power source S1 to the charging roller 1, kept in contact with a photosensitive drum. Also, as the photosensitive drum, a photosensitive drum was used which was set in a process cartridge (trade name: CRG-318BLK; manufactured by CANON INC.) used for the above laser beam printer.

Incidentally, in the above laser beam printer, the photosensitive drum was so set up as to be chargeable by the charging roller after any potential difference before charging was eliminated by a pre-exposure unit 20.

Evaluation (7): Evaluation on multi-color ghost images As electrophotographic image forming apparatus used in the evaluation, the following (i) to (iii) three models having different process speeds were readied.

(i) A laser beam printer for A4-size longitudinal output (trade name: LBP5050; manufactured by CANON INC.; process speed: 73.5 mm/sec, at the time of monochrome printing);
(ii) A laser beam printer for A4-size longitudinal output (trade name: LBP7200C; manufactured by CANON INC.; process speed: 115.5 mm/sec; and
(iii) A conversion model of the laser beam printer according to the above (ii), which was so converted as to be 30 ppm in the number of sheets for output (process speed: 173.3 mm/sec).

The charging roller 1 was set in each of process cartridges for the above laser beam printers, and the process cartridges were respectively mounted to the above laser beam printers.

Then, in a high-temperature and high-humidity environment (temperature 30°C/ humidity 80%RH), images such that 4-point size letters of alphabet "E" were so formed as to be 1% in print percentage were continuously reproduced as electrophotographic images on A4-size sheets of paper. The number of sheets for output was so set as to be 3,000 sheets for the above-(i) laser beam printer, 9,000 sheets for the above-(ii) laser beam printer, and 15,000 sheets for the above-(iii) laser beam printer.

Subsequent to finishing the continuous reproduction of E-letter images, solid images of 15 mm square each were formed in the first station (yellow) and second station (magenta) of each laser beam printer to reproduce red-color solid images of 15 mm square each. Next, in the fourth station (black), a halftone image was reproduced on 1 sheet. This halftone image was visually observed to make evaluation on whether or not any after-image (hereinafter called "ghost") of the solid images of 15 mm square each which were reproduced on the eve remained, i.e., how far a ghost appeared, which was evaluated according to the criteria shown below. Incidentally, the ghost appears on the halftone image in the form of a blank area(s).

The criteria of image evaluation are as shown below. The results of evaluation are shown in Table 10.

[Table 8]

| Rank | Evaluation criteria |
|---|---|
| A | No ghost is seen, or a contour of the ghost is very lightly seen. |
| B | The ghost is slightly seen. |
| C | A contour of the ghost is seen, and also the ghost is in such a density as to look somewhat white. |
| D | A contour of the ghost is clearly seen, and the ghost is in such a density as to look white. |

(Examples 2 & 3)

Surface layer forming coating materials 2-1 to 2-5 and surface layer forming coating materials 3-1 to 3-5 were prepared in the same way as the surface layer forming coating materials in Example 1 except that the condensate 2 and the condensate 3, respectively, were used and that these were so diluted with the mixed solvent as to have a solid-matter concentration of 0.05% by mass, 0.1% by mass, 1% by mass, 4% by mass and 4.5% by mass each for the respective condensates 2 and 3. Then, charging rollers 2-1 to 2-5 and charging rollers 3-1 to 3-5, respectively, were produced in the same way as the charging roller 1 of Example 1 except that the above surface layer forming coating materials were used. These charging rollers were put to Evaluation (3) to Evaluation (7).

(Examples 4 & 5)

Surface layer forming coating materials 4-1 to 4-3 and surface layer forming coating materials 5-1 to 5-3 were prepared in the same way as the surface layer forming coating materials in Example 1 except that the condensate 4 and the condensate 5, respectively, were used and that these were so diluted with the mixed solvent as to have a solid-matter concentration of 0.5% by mass, 1% by mass and 3.5% by mass each for the respective condensates 4 and 5. Then, charging rollers 4-1 to 4-3 and charging rollers 5-1 to 5-3, respectively, were produced in the same way as the charging roller 1 of Example 1 except that the above surface layer forming coating materials were used. These charging rollers were put to Evaluation (3) to Evaluation (7).

(Examples 6 & 7)

Surface layer forming coating materials 6-1 to 6-3 and surface layer forming coating materials 7-1 to 7-3 were prepared in the same way as the surface layer forming coating materials in Example 1 except that the condensate 6 and the condensate 7, respectively, were used and that these were so diluted with the mixed solvent as to have a solid-matter concentration of 0.1% by mass, 1% by mass and 4% by mass each for the respective condensates 6 and 7. Then, charging rollers 6-1 to 6-3 and charging rollers 7-1 to 7-3, respectively, were produced in the same way as the charging roller 1 of Example 1 except that the above surface layer forming coating materials were used. These charging rollers were put to Evaluation (3) to Evaluation (7).

(Examples 8 to 16)

Surface layer forming coating materials 8 to 16 were prepared in the same way as the surface layer forming coating materials in Example 1 except that the condensates 8 to 16, respectively, were used and that these were each so diluted with the mixed solvent as to have a solid-matter concentration of 1% by mass. Then, charging rollers 8 to 16, respectively, were produced in the same way as the charging roller 1 of Example 1 except that the above surface layer forming coating materials were used. These charging rollers were put to Evaluation (3) to Evaluation (7).

The results of Evaluations (3) to (5) on the charging rollers according to Examples 1 to 16 are shown in Table 9, and the results of Evaluations (6) and (7) in Table 10.

[Table 9]

| Example | Charging roller No. | Evaluation | | |
|---|---|---|---|---|
| | | (3) | (4) (nm) | (5) Presence of Si-O-Nb linkage |
| 1 | 1-1 | A | 100 | Yes |
| | 1-2 | A | 5 | Yes |
| | 1-3 | A | 10 | Yes |
| | 1-4 | A | 50 | Yes |
| | 1-5 | A | 350 | Yes |
| | 1-6 | A | 400 | Yes |
| | 1-7 | B | 450 | Yes |
| 2 | 2-1 | A | 5 | Yes |
| | 2-2 | A | 10 | Yes |
| | 2-3 | A | 100 | Yes |
| | 2-4 | B | 400 | Yes |
| | 2-5 | B | 450 | Yes |
| 3 | 3-1 | A | 5 | Yes |
| | 3-2 | A | 10 | Yes |
| | 3-3 | A | 100 | Yes |
| | 3-4 | A | 400 | Yes |
| | 3-5 | B | 450 | Yes |
| 4 | 4-1 | A | 50 | Yes |
| | 4-2 | A | 100 | Yes |
| | 4-3 | A | 350 | Yes |
| 5 | 5-1 | A | 50 | Yes |
| | 5-2 | A | 100 | Yes |
| | 5-3 | A | 350 | Yes |
| 6 | 6-1 | A | 10 | Yes |
| | 6-2 | B | 100 | Yes |
| | 6-3 | B | 400 | Yes |
| 7 | 7-1 | A | 10 | Yes |
| | 7-2 | A | 100 | Yes |
| | 7-3 | A | 400 | Yes |
| 8 | 8 | A | 100 | Yes |
| 9 | 9 | A | 100 | Yes |
| 10 | 10 | A | 100 | Yes |
| 11 | 11 | A | 100 | Yes |
| 12 | 12 | A | 100 | Yes |
| 13 | 13 | A | 100 | Yes |
| 14 | 14 | A | 100 | Yes |
| 15 | 15 | A | 100 | Yes |

(continued)

| Example | Charging roller No. | Evaluation | | |
|---|---|---|---|---|
| | | (3) | (4) (nm) | (5) Presence of Si-O-Nb linkage |
| 16 | 16 | A | 100 | Yes |

[Table 10]

| Example | Charging roller No. | Evaluation (6) | | | Evaluation (7) | | | | | |
|---|---|---|---|---|---|---|---|---|---|---|
| | | Process speed (mm/sec) | | | LBP5050 | | LBP7200 | | LBP7200 conv. machine | |
| | | 73.5 | 115.5 | 173.3 | Initial stg. | After running | Initial stg. | After running | Initial stg. | After running |
| 1 | 1-1 | 497.2 | 489.7 | 482.5 | A | A | A | A | A | B |
| | 1-2 | 500.6 | 485.6 | 479.5 | B | B | B | C | B | C |
| | 1-3 | 499.8 | 488.4 | 480.4 | A | A | A | B | B | C |
| | 1-4 | 499.7 | 490.6 | 482.6 | A | A | A | A | B | B |
| | 1-5 | 497.0 | 489.0 | 482.0 | A | A | A | A | A | A |
| | 1-6 | 497.0 | 488.7 | 482.3 | A | A | A | A | A | A |
| | 1-7 | 496.3 | 488.4 | 481.2 | A | A | A | A | A | A |
| 2 | 2-1 | 504.5 | 497.7 | 491.3 | A | A | A | A | B | B |
| | 2-2 | 504.4 | 497.4 | 490.5 | A | A | A | A | A | B |
| | 2-3 | 503.0 | 496.4 | 490.7 | A | A | A | A | A | A |
| | 2-4 | 501.2 | 495.0 | 487.0 | A | A | A | A | A | A |
| | 2-5 | 501.6 | 494.6 | 487.9 | A | A | A | A | A | A |
| 3 | 3-1 | 495.6 | 488.0 | 480.2 | A | B | B | C | C | C |
| | 3-2 | 495.2 | 488.2 | 480.6 | A | A | B | B | B | B |
| | 3-3 | 494.7 | 488.0 | 480.0 | A | A | A | B | B | B |
| | 3-4 | 492.0 | 487.1 | 479.6 | A | A | A | B | B | B |
| | 3-5 | 492.1 | 486.7 | 479.0 | A | A | A | B | B | B |
| 4 | 4-1 | 499.2 | 493.8 | 486.0 | A | A | A | A | B | B |
| | 4-2 | 499.0 | 493.0 | 486.5 | A | A | A | A | A | B |
| | 4-3 | 498.5 | 492.1 | 484.4 | A | A | A | A | A | A |
| 5 | 5-1 | 494.7 | 488.8 | 481.0 | A | A | B | B | B | B |
| | 5-2 | 494.0 | 488.0 | 481.0 | A | A | A | B | B | B |
| | 5-3 | 493.0 | 487.3 | 480.6 | A | A | A | A | B | B |
| 6 | 6-1 | 507.1 | 499.8 | 491.4 | A | A | A | A | A | B |
| | 6-2 | 506.5 | 497.0 | 491.2 | A | A | A | A | A | A |
| | 6-3 | 506.0 | 496.2 | 488.0 | A | A | A | A | A | A |
| 7 | 7-1 | 492.1 | 485.6 | 476.7 | B | C | B | D | D | D |
| | 7-2 | 490.0 | 485.0 | 478.0 | B | C | B | C | C | C |
| | 7-3 | 489.2 | 483.0 | 476.5 | B | C | B | B | C | C |

(continued)

| Example | Charging roller No. | Evaluation (6) | | | Evaluation (7) | | | | | |
|---|---|---|---|---|---|---|---|---|---|---|
| | | Process speed (mm/sec) | | | LBP5050 | | LBP7200 | | LBP7200 conv. machine | |
| | | 73.5 | 115.5 | 173.3 | Initial stg. | After running | Initial stg. | After running | Initial stg. | After running |
| 8 | 8 | 497.6 | 490.4 | 482.4 | A | A | A | A | A | B |
| 9 | 9 | 497.2 | 490.0 | 484.3 | A | A | A | A | A | B |
| 10 | 10 | 496.3 | 488.3 | 484.5 | A | A | A | A | A | A |
| 11 | 11 | 497.2 | 488.3 | 482.1 | A | A | A | A | A | B |
| 12 | 12 | 495.5 | 488.0 | 480.8 | A | A | A | A | A | B |
| 13 | 13 | 496.5 | 489.6 | 481.3 | A | A | A | A | A | A |
| 14 | 14 | 497.6 | 491.5 | 485.0 | A | A | A | A | A | A |
| 15 | 15 | 497.5 | 490.0 | 485.5 | A | A | A | A | A | B |
| 16 | 16 | 497.1 | 488.1 | 482.3 | A | A | A | A | A | A |

(Comparative Example 1)

A condensate C-1 was prepared in the same way as Synthesis 1 in Example 1 except that this was formulated as shown in Table 11. The condensate C-1 was put to evaluation (1) to find that the evaluation result was ranked "A". Incidentally, Evaluation (2) was not made because any hydrolyzable niobium compound corresponding to the component (C) was not used in preparing the condensate C-1.

Next, a surface layer forming coating material C-1 was prepared in the same way as the surface layer forming coating material in Example 1 except that the condensate C-1 was used. Then, a charging roller C-1 was produced in the same way as Example 1 except that the surface layer forming coating material C-1 was used. The charging roller obtained were put to Evaluations (3), (4), (6) and (7). Incidentally, Evaluation (5) was not made because any hydrolyzable niobium compound was not made as a raw material of the condensate C-1.

(Comparative Example 2)

Materials shown in Table 11 were stirred at room temperature for 3 hours to prepare a condensate C-2. The condensate C-2 was put to evaluation (1) to find that the evaluation result was ranked "D". Also, Evaluation (2) was not made because any hydrolyzable silane compounds corresponding to the components (A) and (B) were not used in preparing the condensate C-2. Next, a surface layer forming coating material C-2 was prepared in the same way as Example 1 except that the condensate C-2 was used and that any photopolymerization initiator was not added. Then, a charging roller C-2 was produced in the same way as the method of producing the charging roller 1 according to Example 1 except that the surface layer forming coating material C-2 was used. The charging roller C-2 was put to Evaluation (3). Incidentally, Evaluations (4), (6) and (7) were not made because the stability and coating performance of the surface layer forming coating material 17 were so poor as to make it difficult to form the film. Evaluation (5) was also not made because any hydrolyzable silane compound was not used as a raw material of the condensate C-2.

The results of evaluation are shown in Tables 12 and 13.

[Table 11]

| Condensate No. | Amount (g) in formulation | | | | | |
|---|---|---|---|---|---|---|
| | Component (A) | Component (B) | | $H_2O$ | EtOH | Component (C) |
| | EP-1 | He | Ph | | | Nb-1 |
| C-1 | 71.02 | - | - | 11.33 | 91.37 | - |
| C-2 | - | - | - | 7.83 | 20.01 | 46.14 |

[Table 12]

| Comparative Example | Charging roller No. | Evaluation | |
|---|---|---|---|
| | | (3) | (4) (nm) |
| 1 | C-1 | B | 100 |
| 2 | C-2 | C | - |

[Table 13]

| Comparative Example | Charging roller No. | Evaluation (6) | | | Evaluation (7) | | | | | |
|---|---|---|---|---|---|---|---|---|---|---|
| | | Process speed (mm/sec) | | | LBP5050 | | LBP7200 | | LBP7200 conv. machine | |
| | | 73.5 | 115.5 | 173.3 | Initial stg. | After running | Initial stg. | After running | Initial stg. | After running |
| 1 | C-1 | 479.6 | 470.5 | 465.5 | D | D | D | D | D | D |
| 2 | C-2 | - | - | - | - | - | - | - | - | - |

**Reference Signs List**

| | |
|---|---|
| 101 | substrate |
| 102 | elastic layer |
| 103 | surface layer |
| 1a-1d | electrophotographic photosensitive members |
| 2a-2d | charging members (charging rollers) |
| 3a-3d | exposure means |
| 4a-4d | developing means |
| 5a-5d | cleaning means |
| 6 | intermediate transfer member (intermediate transfer belt) |
| 7a-7d | transfer members (transfer rollers) |
| P | transfer material |
| 10 | surface potentiometer |
| 20 | pre-exposure means |
| 21 | electrophotographic photosensitive member |
| 22 | charging member (charging roller) |
| S1 | bias applying power source |

## Claims

**1.** A charging member comprising a substrate, an elastic layer and a surface layer; wherein said surface layer contains a high-molecular compound having an Si-O-Nb linkage; said high-molecular compound has a constitutional unit represented by the following formula (1) and a constitutional unit represented by the following formula (2):

Formula (1)

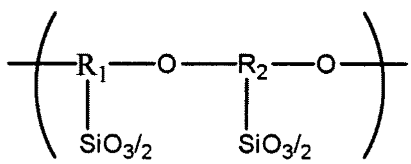

Formula (2) $NbO_{5/2}$

where, in the formula (1), $R_1$ and $R_2$ each independently represent any of structures represented by the following formulas (3) to (6):

Formula (3)

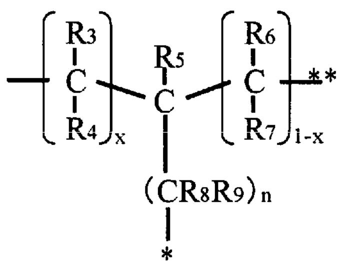

Formula (4)

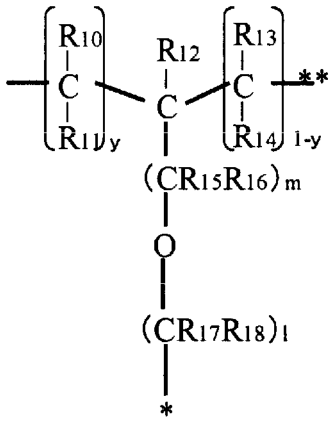

Formula (5)

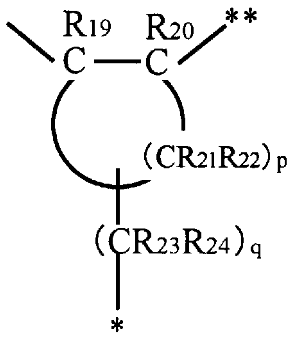

Formula (6)

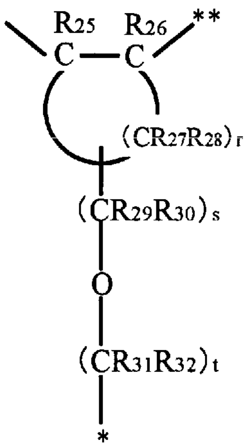

where, in the formulas (3) to (6), $R_3$ to $R_7$, $R_{10}$ to $R_{14}$, $R_{19}$, $R_{20}$, $R_{25}$ and $R_{26}$ each independently represent a hydrogen atom, an alkyl group having 1 to 4 carbon atom(s), a hydroxyl group, a carboxyl group or an amino group; $R_8$, $R_9$, $R_{15}$ to $R_{18}$, $R_{23}$, $R_{24}$ and $R_{29}$ to $R_{32}$ each independently represent a hydrogen atom or an alkyl group having 1 to 4 carbon atom(s); $R_{21}$, $R_{22}$, $R_{27}$ and $R_{28}$ each independently represent a hydrogen atom, an alkoxyl group or alkyl group having 1 to 4 carbon atom(s); n, m, l, q, s and t each independently represent an integer of 1 to 8, p and r each independently represent an integer of 4 to 12, and x and y each independently represent 0 or 1; and an asterisk * and a double asterisk ** each represent the position of bonding with the silicon atom and oxygen atom, respectively, in the formula (1).

2. The charging member according to claim 1, wherein, in said high-molecular compound, $R_1$ and $R_2$ in the formula

(1) are each independently any of structures represented by the following formulas (7) to (10):

Formula (7)

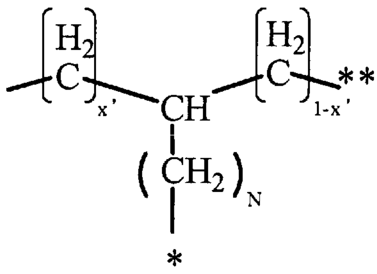

Formula (8)

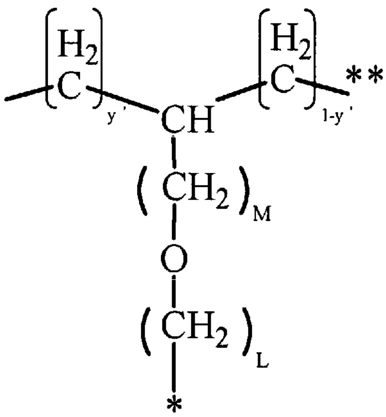

Formula (9)

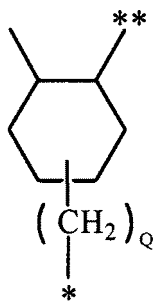

Formula (10)

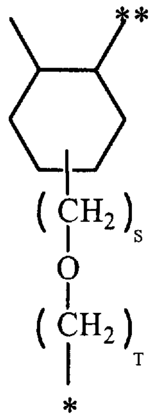

where, in the formulas (7) to (10), N, M, L, Q, S and T each independently represent an integer of 1 or more to 8 or less, and x' and y' each independently represent 0 or 1; and an asterisk * and a double asterisk ** each represent the position of bonding with the silicon atom and oxygen atom, respectively, in the formula (1).

**3.** The charging member according to claim 1 or 2, wherein, in said high-molecular compound, the ratio of the number of atoms of niobium to that of silicon, Nb/Si, is from 0.1 or more to 12.5 or less.

**4.** The charging member according to any one of claims 1 to 3, wherein said high-molecular compound is a cross-linked product of a hydrolyzed condensate of a hydrolyzable compound represented by the following formula (11) and a hydrolyzable compound represented by the following formula (12):

Formula (11) $R_{33\text{-}Si}\ (OR_{34})\ (OR_{35})\ (OR_{36})$

Formula (12) $Nb(OR_{37})\ (OR_{38})\ (OR_{39})\ (OR_{40})\ (OR_{41})$

where, in the formula (11), $R_{33}$ represents any of structures represented by the following formulas (13) to (16), each having an epoxy group; and $R_{34}$ to $R_{36}$ each independently represent a hydrocarbon group; and, in the formula (12), $R_{37}$ to $R_{41}$ each independently represent a hydrocarbon group:

Formula (13)

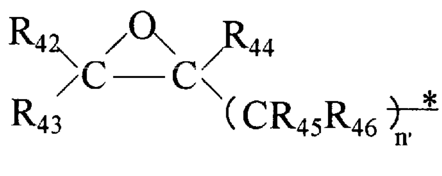

Formula (14)

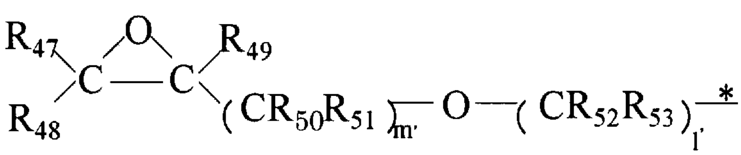

Formula (15)

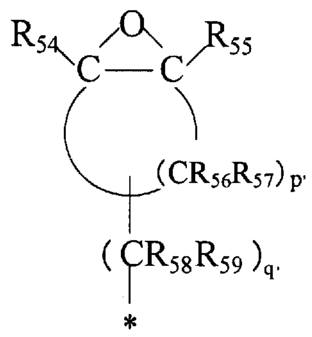

Formula (16)

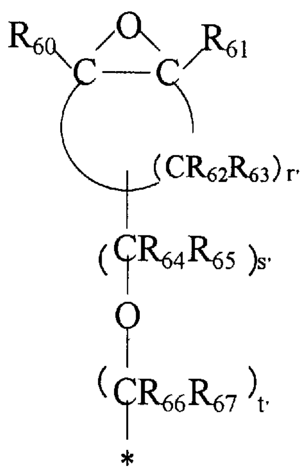

where, in the formulas (13) to (16), $R_{42}$ to $R_{44}$, $R_{47}$ to $R_{49}$, $R_{54}$, $R_{55}$, $R_{60}$ and $R_{61}$ each independently represent a hydrogen atom, an alkyl group having 1 to 4 carbon atom(s), a hydroxyl group, a carboxyl group or an amino group; $R_{45}$, $R_{46}$, $R_{50}$ to $R_{53}$, $R_{58}$, $R_{59}$ and $R_{64}$ to $R_{67}$ each independently represent a hydrogen atom or an alkyl group having 1 to 4 carbon atom(s); $R_{56}$, $R_{57}$, $R_{62}$ and $R_{63}$ each independently represent a hydrogen atom, an alkoxyl group having 1 to 4 carbon atom(s) or an alkyl group having 1 to 4 carbon atom(s); n', m', l', q', s' and t' each independently represent an integer of 1 to 8, and p' and r' each independently represent an integer of 4 to 12; and an asterisk * represents the position of bonding with the silicon atom in the formula (11).

**5.** The charging member according to any one of claims 1 to 3, wherein said high-molecular compound is a cross-linked product of a hydrolyzed condensate of a hydrolyzable compound represented by the following formula (11), a hydrolyzable compound represented by the following formula (12) and a hydrolyzable compound represented by the following formula (17):

Formula (11) $R_{33}$-Si $(OR_{34})$ $(OR_{35})(OR_{36})$

Formula (12) $Nb(OR_{37})$ $(OR_{38})$ $(OR_{39})$ $(OR_{40})$ $(OR_{41})$

where, in the formula (11), $R_{33}$ represents any of structures represented by the following formulas (13) to (16), each having an epoxy group; and $R_{34}$ to $R_{36}$ each independently represent a hydrocarbon group; and, in the formula (12), $R_{37}$ to $R_{41}$ each independently represent a hydrocarbon group:

Formula (13)

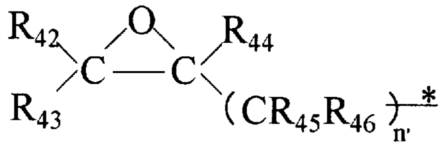

Formula (14)

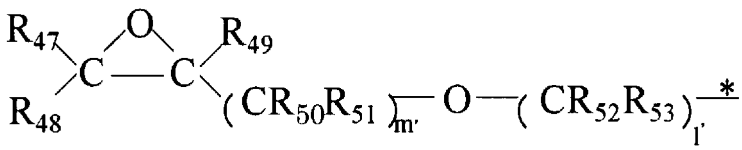

Formula (15)

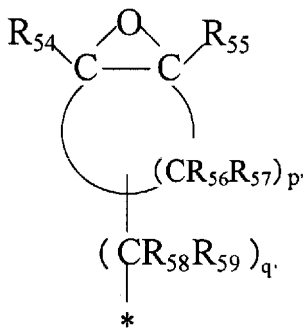

Formula (16)

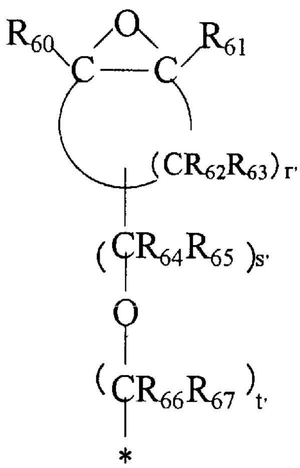

where, in the formulas (13) to (16), $R_{42}$ to $R_{44}$, $R_{47}$ to $R_{49}$, $R_{54}$, $R_{55}$, $R_{60}$ and $R_{61}$ each independently represent a hydrogen atom, an alkyl group having 1 to 4 carbon atom(s), a hydroxyl group, a carboxyl group or an amino group; $R_{45}$, $R_{46}$, $R_{50}$ to $R_{53}$, $R_{58}$, $R_{59}$ and $R_{64}$ to $R_{67}$ each independently represent a hydrogen atom or an alkyl group having 1 to 4 carbon atom(s); $R_{56}$, $R_{57}$, $R_{62}$ and $R_{63}$ each independently represent a hydrogen atom, an alkoxyl group having 1 to 4 carbon atom(s) or an alkyl group having 1 to 4 carbon atom(s); n', m', l', q', s' and t' each

independently represent an integer of 1 to 8, and p' and r' each independently represent an integer of 4 to 12; and an asterisk * represents the position of bonding with the silicon atom in the formula (11); and

Formula (17) $R_{68}$-Si $(OR_{69})(OR_{70})$ $(OR_{71})$

where, in the formula (17), $R_{68}$ represents an alkyl group or an aryl group, and $R_{69}$ to $R_{71}$ each independently represent a hydrocarbon group.

**6.** An electrophotographic apparatus comprising an electrophotographic photosensitive member and a charging member disposed in contact with said electrophotographic photosensitive member; wherein said charging member is the charging member according to any one of claims 1 to 5, disposed in contact with the electrophotographic photosensitive member.

**7.** A process cartridge detachably mountable to a main body of an electrophotographic apparatus, comprising:

an electrophotographic photosensitive member, and
the charging member according to any one of claims 1 to 5, disposed in contact with said electrophotographic photosensitive member.

**Patentansprüche**

**1.** Ladeelement, das ein Substrat, eine elastische Schicht und eine Oberflächenschicht umfasst; wobei die Oberflächenschicht eine hochmolekulare Verbindung mit einer Si-O-Nb-Verknüpfung enthält; wobei die hochmolekulare Verbindung eine aufbauende Einheit aufweist, die durch die folgende Formel (1) dargestellt ist, und eine aufbauende Einheit aufweist, die durch die folgende Formel (2) dargestellt ist:

Formel (1)

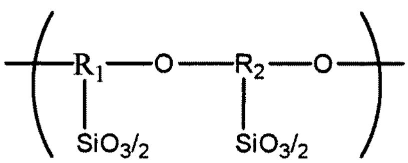

Formel (2) $NbO_{5/2}$

wobei in der Formel (1) $R_1$ und $R_2$ jeweils unabhängig irgendeine aus den durch die folgenden Formeln (3) bis (6) dargestellten Strukturen darstellt:

Formel (3)

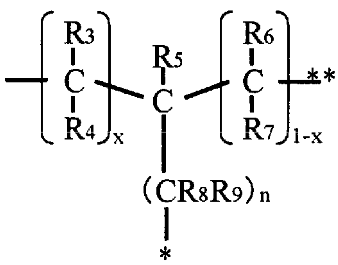

Formel (4)

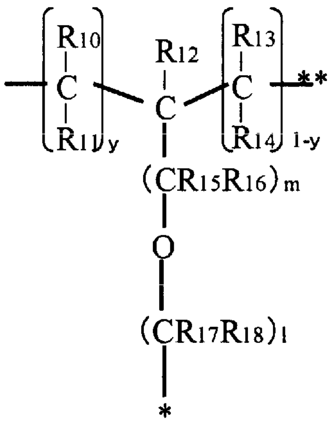

Formel (5)

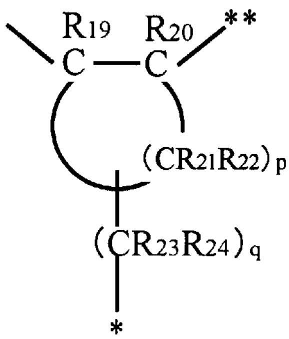

Formel (6)

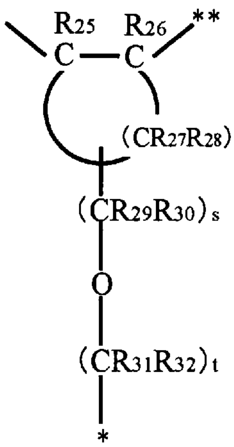

wobei in den Formeln (3) bis (6) $R_3$ bis $R_7$, $R_{10}$ bis $R_{14}$, $R_{19}$, $R_{20}$, $R_{25}$ und $R_{26}$ jeweils unabhängig ein Wasserstoffatom, eine Alkylgruppe mit 1 bis 4 Kohlenstoffatomen, eine Hydroxylgruppe, eine Carboxylgruppe oder eine Aminogruppe darstellen; $R_8$, $R_9$, $R_{15}$ bis $R_{18}$, $R_{23}$, $R_{24}$ und $R_{29}$ bis $R_{32}$ jeweils unabhängig ein Wasserstoffatom oder eine Alkylgruppe mit 1 bis 4 Kohlenstoffatomen darstellen; $R_{21}$, $R_{22}$, $R_{27}$ und $R_{28}$ jeweils unabhängig ein Wasserstoffatom, eine Alkoxylgruppe oder eine Alkylgruppe mit 1 bis 4 Kohlenstoffatomen darstellen; n, m, l, q, s und t jeweils unabhängig eine ganze Zahl von 1 bis 8 darstellen, p und r jeweils unabhängig eine ganze Zahl von 4 bis 12

darstellen und x und y jeweils unabhängig 0 oder 1 darstellt; und ein Sternzeichen * und ein doppeltes Sternzeichen ** jeweils unabhängig die Bindungsposition mit dem Siliziumatom bzw. dem Sauerstoffatom in der Formel (1) darstellen.

**2.** Ladeelement nach Anspruch 1, wobei in der hochmolekularen Verbindung $R_1$ und $R_2$ in der Formel (1) jeweils unabhängig irgendeine der durch die folgenden Formeln (7) bis (10) dargestellten Strukturen sind:

Formel (7)

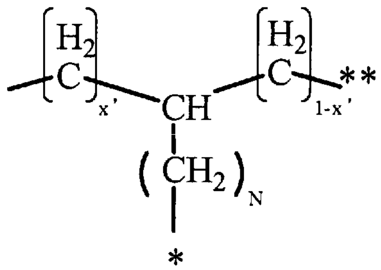

Formel (8)

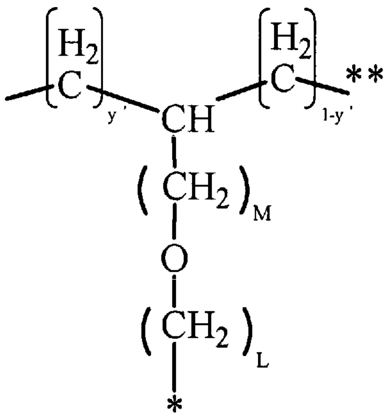

Formel (9)

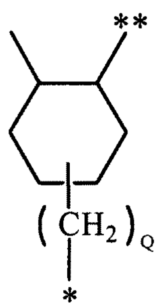

Formel (10)

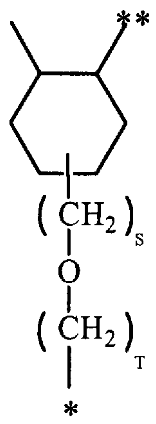

wobei in den Formeln (7) bis (10) N, M, L, Q, S und T jeweils unabhängig eine ganze Zahl von 1 oder mehr bis 8 oder weniger darstellen, x' und y' jeweils unabhängig 0 oder 1 darstellen; und ein Sternzeichen * und ein doppeltes Sternzeichen ** jeweils die Bindungsposition mit dem Siliziumatom bzw. dem Sauerstoffatom in der Formel (1) darstellen.

**3.** Ladeelement nach Anspruch 1 oder 2, wobei in der hochmolekularen Verbindung das Verhältnis der Atomanzahl an Niob zu der an Silizium, Nb/Si, von 0,1 oder mehr bis 12,5 oder weniger ist.

**4.** Ladeelement nach einem der Ansprüche 1 bis 3, wobei die hochmolekulare Verbindung ein vernetztes Produkt eines hydrolisierten Kondensats aus einer hydrolisierbaren Verbindung, die durch die folgende Formel (11) dargestellt ist, und einer hydrolisierbaren Verbindung, die durch die folgende Formel (12) dargestellt ist, ist:

Formel (11) $R_{33}\text{-}Si(OR_{34})(OR_{35})(OR_{36})$

Formel (12) $Nb(OR_{37})(OR_{38})(OR_{39})(OR_{40})(OR_{41})$

wobei in der Formel (11) $R_{33}$ irgendeine der durch die folgenden Formeln (13) bis (16) dargestellten Strukturen darstellt, die jeweils eine Epoxygruppe aufweisen; und $R_{34}$ bis $R_{36}$ jeweils unabhängig eine Kohlenwasserstoffgruppe darstellen; und in der Formel (12) $R_{37}$ bis $R_{41}$ jeweils unabhängig eine Kohlenwasserstoffgruppe darstellen:

Formel (13)

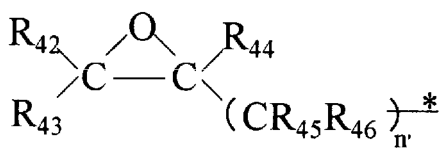

Formel (14)

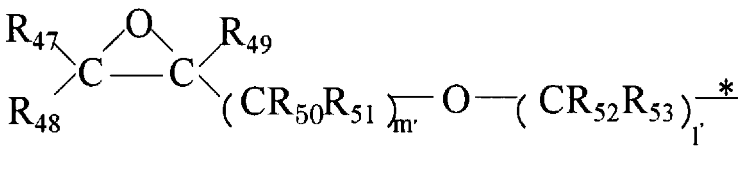

Formel (15)

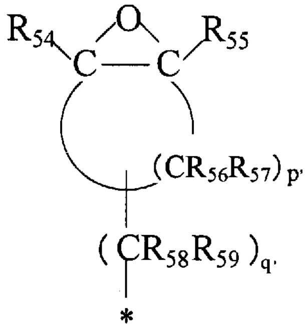

Formel (16)

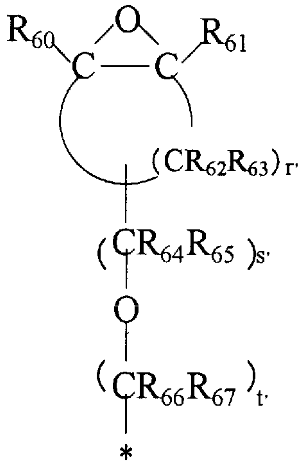

wobei in den Formeln (13) bis (16) $R_{42}$ bis $R_{44}$, $R_{47}$ bis $R_{49}$, $R_{54}$, $R_{55}$, $R_{60}$ und $R_{61}$ jeweils unabhängig ein Wasserstoffatom, eine Alkylgruppe mit 1 bis 4 Kohlenstoffatomen, eine Hydroxylgruppe, eine Carboxylgruppe oder eine Aminogruppe darstellt; $R_{45}$, $R_{46}$, $R_{50}$ bis $R_{53}$, $R_{58}$, $R_{59}$ und $R_{64}$ bis $R_{67}$ jeweils unabhängig ein Wasserstoffatom oder eine Alkylgruppe mit 1 bis 4 Kohlenstoffatomen darstellen; $R_{56}$, $R_{57}$, $R_{62}$ oder $R_{63}$ jeweils unabhängig ein Wasserstoffatom, eine Alkoxylgruppe mit 1 bis 4 Kohlenstoffatomen oder eine Alkylgruppe mit 1 bis 4 Kohlenstoffatomen darstellen; n', m', l', q', s' und t' jeweils unabhängig eine ganze Zahl von 1 bis 8 darstellen, und p' und r' jeweils unabhängig eine ganze Zahl von 4 bis 12 darstellen; und ein Sternzeichen * die Bindungsposition mit dem Siliziumatom in der Formel (11) darstellt.

5. Ladeelement nach einem der Ansprüche 1 bis 3, wobei die hochmolekulare Verbindung ein vernetztes Produkt eines hydrolisierten Kondensats aus einer hydrolisierbaren Verbindung, die durch die folgende Formel (11) dargestellt ist, einer hydrolisierbaren Verbindung, die durch die folgende Formel (12) dargestellt ist, und einer hydrolisierbaren Verbindung, die durch die folgende Formel (17) dargestellt ist, ist:

Formel (11) $R_{33}\text{-Si}(OR_{34})(OR_{35})(OR_{36})$

Formel (12) $Nb(OR_{37})(OR_{38})(OR_{39})(OR_{40})(OR_{41})$

wobei in der Formel (11) $R_{33}$ irgendeine der durch die folgenden Formeln (13) bis (16) dargestellten Strukturen darstellt, die jeweils eine Epoxygruppe aufweisen; und $R_{34}$ bis $R_{36}$ jeweils unabhängig eine Kohlenwasserstoffgruppe

darstellen; und in der Formel (12) $R_{37}$ bis $R_{41}$ jeweils unabhängig eine Kohlenwasserstoffgruppe darstellen:

Formel (13)

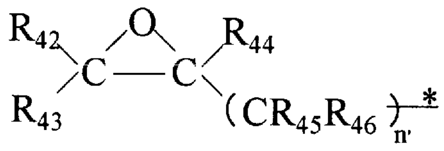

Formel (14)

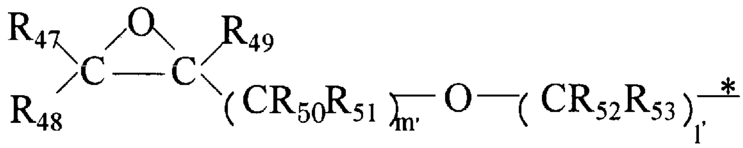

Formel (15)

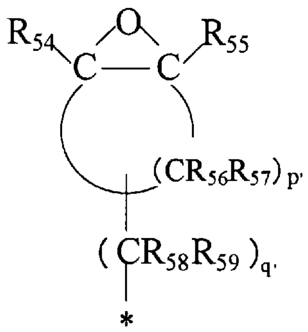

Formel (16)

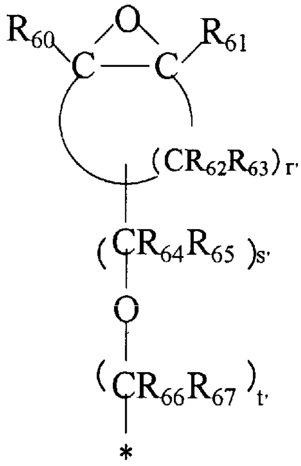

wobei in den Formeln (13) bis (16) $R_{42}$ bis $R_{44}$, $R_{47}$ bis $R_{49}$, $R_{54}$, $R_{55}$, $R_{60}$ und $R_{61}$ jeweils unabhängig ein Wasserstoffatom, eine Alkylgruppe mit 1 bis 4 Kohlenstoffatomen, eine Hydroxylgruppe, eine Carboxylgruppe oder eine Aminogruppe darstellt; $R_{45}$, $R_{46}$, $R_{50}$ bis $R_{53}$, $R_{58}$, $R_{59}$ und $R_{64}$ bis $R_{67}$ jeweils unabhängig ein Wasserstoffatom oder eine Alkylgruppe mit 1 bis 4 Kohlenstoffatomen darstellen; $R_{56}$, $R_{57}$, $R_{62}$ oder $R_{63}$ jeweils unabhängig ein Wasserstoffatom, eine Alkoxylgruppe mit 1 bis 4 Kohlenstoffatomen oder eine Alkylgruppe mit 1 bis 4 Kohlenstoffatomen darstellen; n', m', l', q', s' und t' jeweils unabhängig eine ganze Zahl von 1 bis 8 darstellen, und p' und r' jeweils unabhängig eine ganze Zahl von 4 bis 12 darstellen; und ein Sternzeichen * die Bindungsposition mit dem Siliziumatom in der Formel (11) darstellt; und

Formel 17) $R_{68}\text{-Si}(OR_{69})(OR_{70})(OR_{71})$

wobei in der Formel (17) $R_{68}$ eine Alkylgruppe oder eine Arylgruppe darstellt und $R_{69}$ bis $R_{71}$ jeweils unabhängig eine Kohlenwasserstoffgruppe darstellen.

**6.** Elektrophotographischer Apparat, der ein elektrophotographisches photosensitives Element und ein Ladeelement, das in Kontakt mit dem elektrophotographischen photosensitiven Element angeordnet ist, umfasst; wobei das Ladeelement das Ladeelement nach einem der Ansprüche 1 bis 5 ist, das in Kontakt mit dem elektrophotographischen photosensitiven Element angeordnet ist.

**7.** Prozesskartusche, die abnehmbar an einen Hauptkörper eines elektrophotographischen Apparats montierbar ist, umfassend:

ein elektrophotographisches photosensitives Element, und
das Ladeelement nach einem der Ansprüche 1 bis 5, das in Kontakt mit dem elektrophotographischen photosensitiven Element angeordnet ist.

## Revendications

**1.** Elément de charge comprenant un substrat, une couche élastique et une couche de surface ; dans lequel
ladite couche de surface contient un composé de haut poids moléculaire ayant une liaison Si-O-Nb ;
ledit composé de haut poids moléculaire possède un motif constitutif représenté par la formule (1) suivante et un motif constitutif représenté par la formule (2) suivante :

Formule (1)

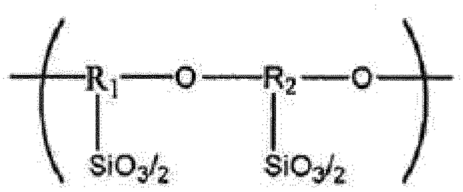

Formule (2) $NbO_{5/2}$

où, dans la formule (1), $R_1$ et $R_2$ représentent chacun indépendamment n'importe laquelle des structures représentées par les formules (3) à (6) suivantes :

Formule (3)

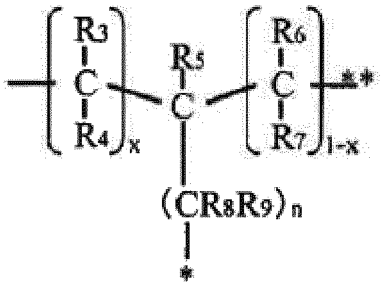

Formule (4)

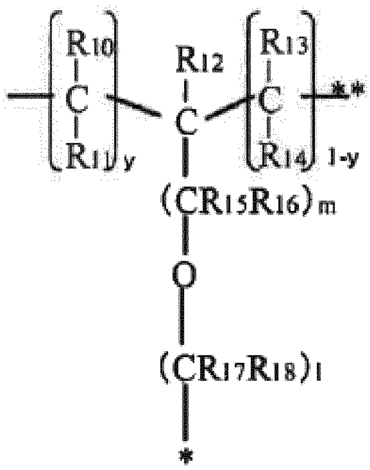

Formule (5)

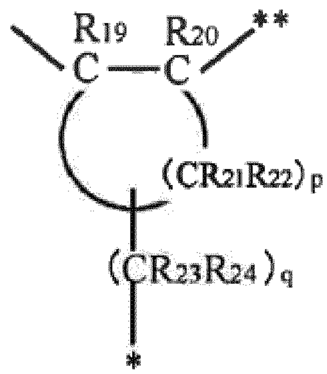

Formule (6)

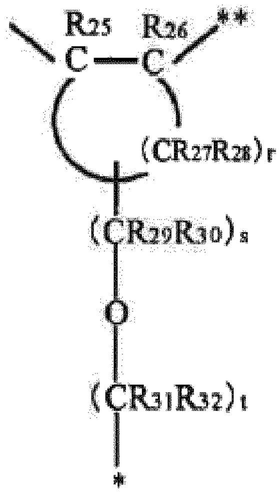

où, dans les formules (3) à (6), $R_3$ à $R_7$, $R_{10}$ à $R_{14}$, $R_{19}$, $R_{20,}$ $R_{25}$ et $R_{26}$ représentent chacun indépendamment un atome d'hydrogène, un groupe alkyle ayant 1 à 4 atomes de carbone, un groupe hydroxyle, un groupe carboxyle ou un groupe amino ; $R_8$, $R_9$, $R_{15}$ à $R_{18}$, $R_{23}$, $R_{24}$ et $R_{29}$ à $R_{32}$ représentent chacun indépendamment un atome d'hydrogène ou un groupe alkyle ayant 1 à 4 atomes de carbone ; $R_{21}$, $R_{22}$, $R_{27}$ à $R_{28}$ représentent chacun indépendamment un atome d'hydrogène, un groupe alkoxyle ou un groupe alkyle ayant 1 à 4 atomes de carbone ; n, m, l, q, s et t représentent chacun indépendamment un nombre entier de 1 à 8, p et r représentent chacun indépendamment un nombre entier de 4 à 12 et x et y sont chacun égaux indépendamment à 0 ou 1 ; et un astérisque * et un double astérisque ** représentent chacun la position de liaison avec l'atome de silicium et l'atome d'oxygène, respectivement, dans la formule (1).

**2.** Elément de charge suivant la revendication 1, dans lequel, dans ledit composé de haut point moléculaire, $R_1$ et $R_2$ dans la formule (1) représentent chacun indépendamment n'importe laquelle des structures représentées par les formules (7) à (10) suivantes :

Formule (7)

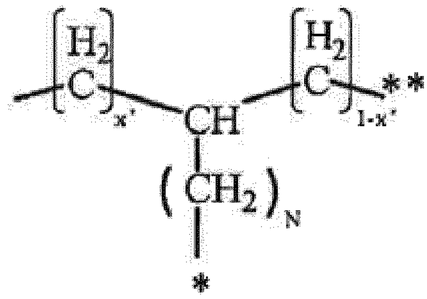

Formule (8)

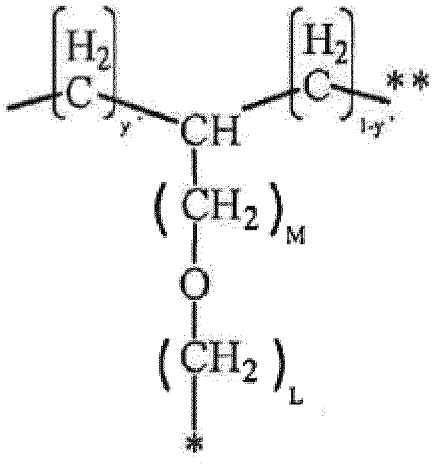

Formule (9)

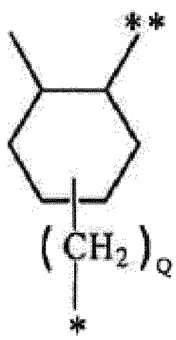

Formule (10)

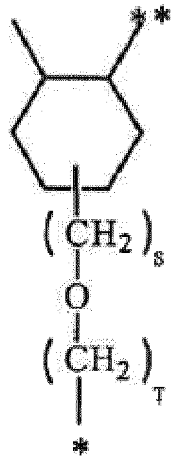

où, dans les formules (7) à (10), N, M, L, Q, S et T représentent chacun indépendamment un nombre entier de 1 ou plus à 8 ou moins, et x' et y' sont chacun égaux indépendamment à 0 ou 1 ; un astérisque * et un double astérisque ** représentent chacun la position de liaison avec l'atome de silicium et l'atome d'oxygène, respectivement, dans la formule (1).

3. Elément de charge suivant la revendication 1 ou 2, dans lequel, dans ledit composé de haut poids moléculaire, le rapport du nombre d'atomes de niobium à celui du silicium, Nb/Si, va de 0,1 ou plus à 12,5 ou moins.

4. Elément de charge suivant l'une quelconque des revendications 1 à 3, dans lequel ledit composé de haut poids moléculaire est un produit réticulé dans les produits de condensation hydrolysés d'un composé hydrolysable représenté par la formule (11) suivante et d'un composé hydrolysable représenté par la formule (12) suivante :

Formule (11) $R_{33}\text{-Si}\ (OR_{34})\ (OR_{35})\ (OR_{36})$

Formule (12) $Nb\ (OR_{37})\ (OR_{38})\ (OR_{39})\ (OR_{40})\ (OR_{41})$

où, dans la formule (11), $R_{33}$ représente n'importe laquelle des structures représentées par les formules (13) à (16) suivantes, chacune ayant un groupe époxy ; $R_{34}$ à $R_{36}$ représentent chacun indépendamment un groupe hydrocarboné ; et, dans la formule (12), $R_{37}$ à $R_{41}$ représentent chacun indépendamment un groupe hydrocarboné ;

Formule (13)

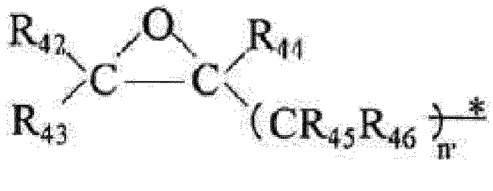

Formule (14)

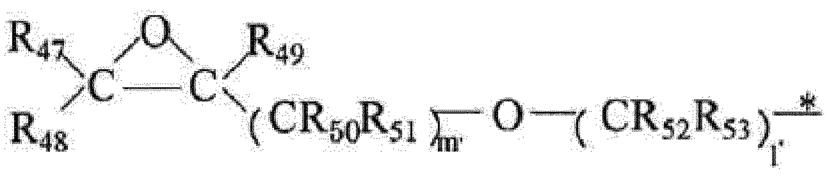

Formule (15)

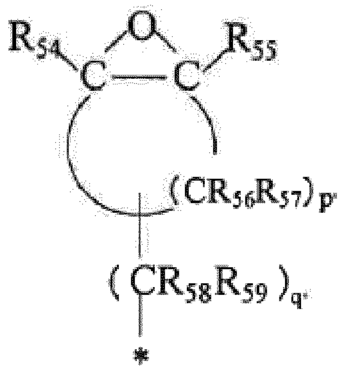

Formule (16)

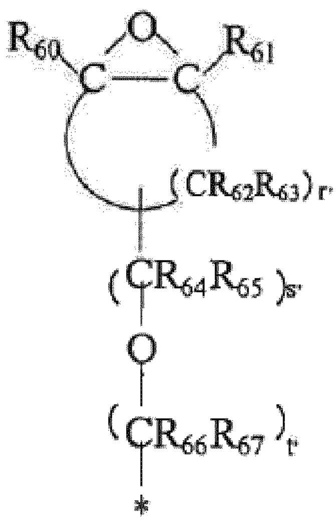

où, dans les formules (13) à (16), $R_{42}$ à $R_{44}$, $R_{47}$ à $R_{49}$, $R_{54}$, $R_{55}$, $R_{60}$ et $R_{61}$ représentent chacun indépendamment un atome d'hydrogène, un groupe alkyle ayant 1 à 4 atomes de carbone, un groupe hydroxyle, un groupe carboxyle ou un groupe amino ; $R_{45}$, $R_{46}$, $R_{50}$ à $R_{53}$, $R_{58}$, $R_{59}$ et $R_{64}$, à $R_{67}$ représentent chacun indépendamment un atome d'hydrogène ou un groupe alkyle ayant 1 à 4 atomes de carbone ; $R_{56}$, $R_{57}$, $R_{62}$ et $R_{63}$ représentent chacun indépendamment un atome d'hydrogène, un groupe alkoxyle ayant 1 à 4 atomes de carbone ou un groupe alkyle ayant 1 à 4 atomes de carbone ; n', m', l', q', s' et t' représentent chacun indépendamment un nombre entier de 1 à 8, et p' et r' représentent chacun indépendamment un nombre entier de 4 à 12 ; et un astérisque * représente la position de liaison avec l'atome de silicium dans la formule (11).

**5.** Elément de charge suivant l'une quelconque des revendications 1 à 3, dans lequel ledit composé de haut poids moléculaire est un produit réticulé d'un produit de condensation hydrolysé d'un composé hydrolysable représenté par la formule (11) suivante, d'un composé hydrolysable représenté par la formule (12) suivante et d'un composé hydrolysable représenté par la formule (17) suivante :

Formule (11) $R_3$-Si ($OR_{34}$ ($OR_{35}$ ($OR_{36}$

Formule (12) Nb ($OR_{37}$) ($OR_{38}$) ($OR_{39}$) ($OR_{40}$) ($OR_{41}$)

où, dans la formule (11), $R_{33}$ représente n'importe laquelle des structures représentées par les formules (13) à (16) suivantes, chacune ayant un groupe époxy ; $R_{34}$ à $R_{36}$ représentent chacun indépendamment un groupe hydrocarboné ; et, dans la formule (12), $R_{37}$ à $R_{41}$ représentent chacun indépendamment un groupe hydrocarboné :

Formule (13)

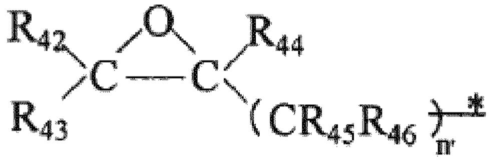

Formule (14)

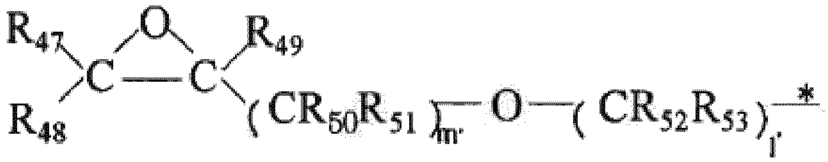

Formule (15)

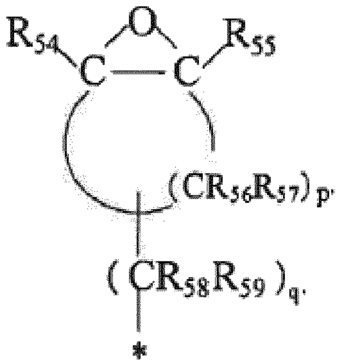

Formule (16)

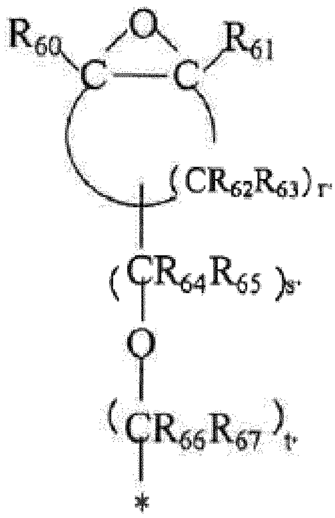

où, dans les formules (13) à (16), $R_{42}$ à $R_{44}$, $R_{47}$ à $R_{49}$, $R_{54}$, $R_{55}$, $R_{60}$ et $R_{61}$ représentent chacun indépendamment un atome d'hydrogène, un groupe alkyle ayant 1 à 4 atomes de carbone, un groupe hydroxyle, un groupe carboxyle ou un groupe amino ; $R_{45}$, $R_{46}$, $R_{50}$ à $R_{53}$, $R_{58}$, $R_{59}$ et $R_{64}$ à $R_{67}$ représentent chacun indépendamment un atome

d'hydrogène ou un groupe alkyle ayant 1 à 4 atomes de carbone ; $R_{56}$, $R_{57}$, $R_{62}$ et $R_{63}$ représentent chacun indépendamment un atome d'hydrogène, un groupe alkoxyle ayant 1 à 4 atomes de carbone ou un groupe alkyle ayant 1 à 4 atomes de carbone ; n', m', l', q', s' et t' représentent chacun indépendamment un nombre entier de 1 à 8 et p' et r' représentent chacun indépendamment un nombre entier de 4 à 12 ; et un astérisque * représente la position de liaison avec l'atome de silicium dans la formule (11) ; et

Formule (17) $R_{68}$-Si (($OR_{69}$) ($OR_{70}$) ($OR_{71}$)

où, dans la formule (17), $R_{68}$ représente un groupe alkyle ou un groupe aryle, et $R_{69}$ à $R_{71}$ représentent chacun indépendamment un group hydrocarboné.

**6.** Appareil électrophotographique comprenant un élément photosensible électrophotographique et un élément de charge disposé en contact avec ledit élément photosensible électrophotographique ; dans lequel ledit élément de charge est l'élément de charge suivant l'une quelconque des revendications 1 à 5, disposé en contact avec l'élément photosensible électrophotographique.

**7.** Cartouche de traitement pouvant être montée de manière amovible dans le corps principal d'un appareil électrophotographique, comprenant :

un élément photosensible électrophotographique, et
l'élément de charge suivant l'une quelconque des revendications 1 à 5, disposé en contact avec ledit élément photosensible électrophotographique.

FIG. 1

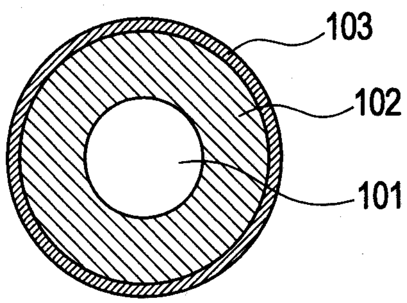
103
102
101

FIG. 2

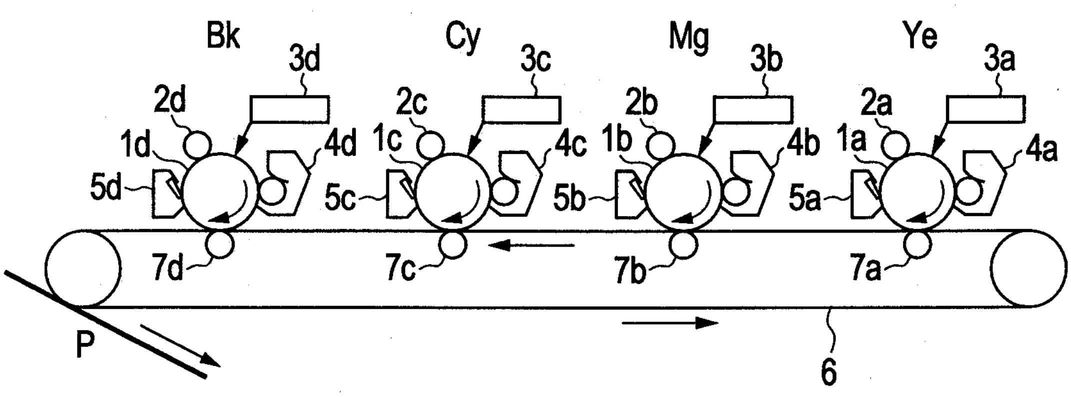
Bk
Cy
Mg
Ye
3d
3c
3b
3a
2d
2c
2b
2a
1d
1c
1b
1a
4d
4c
4b
4a
5d
5c
5b
5a
7d
7c
7b
7a
P
6

FIG. 3

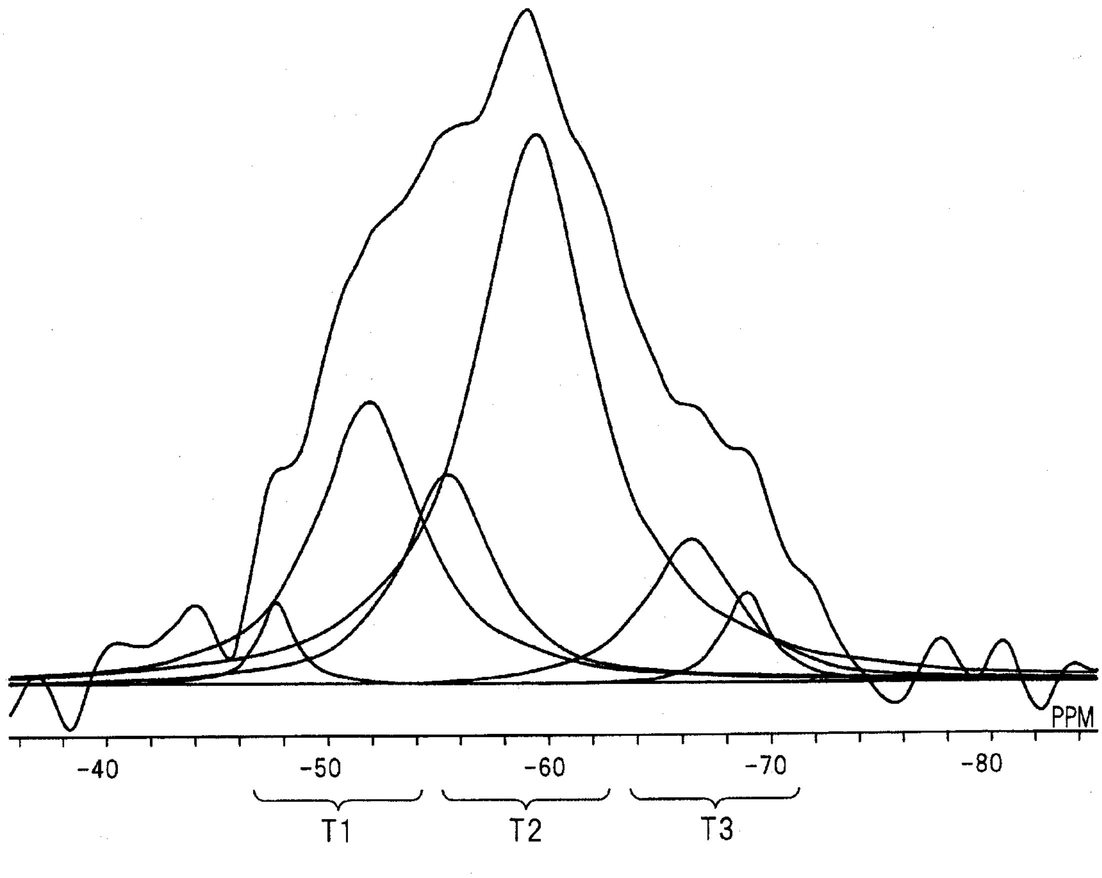

FIG. 4

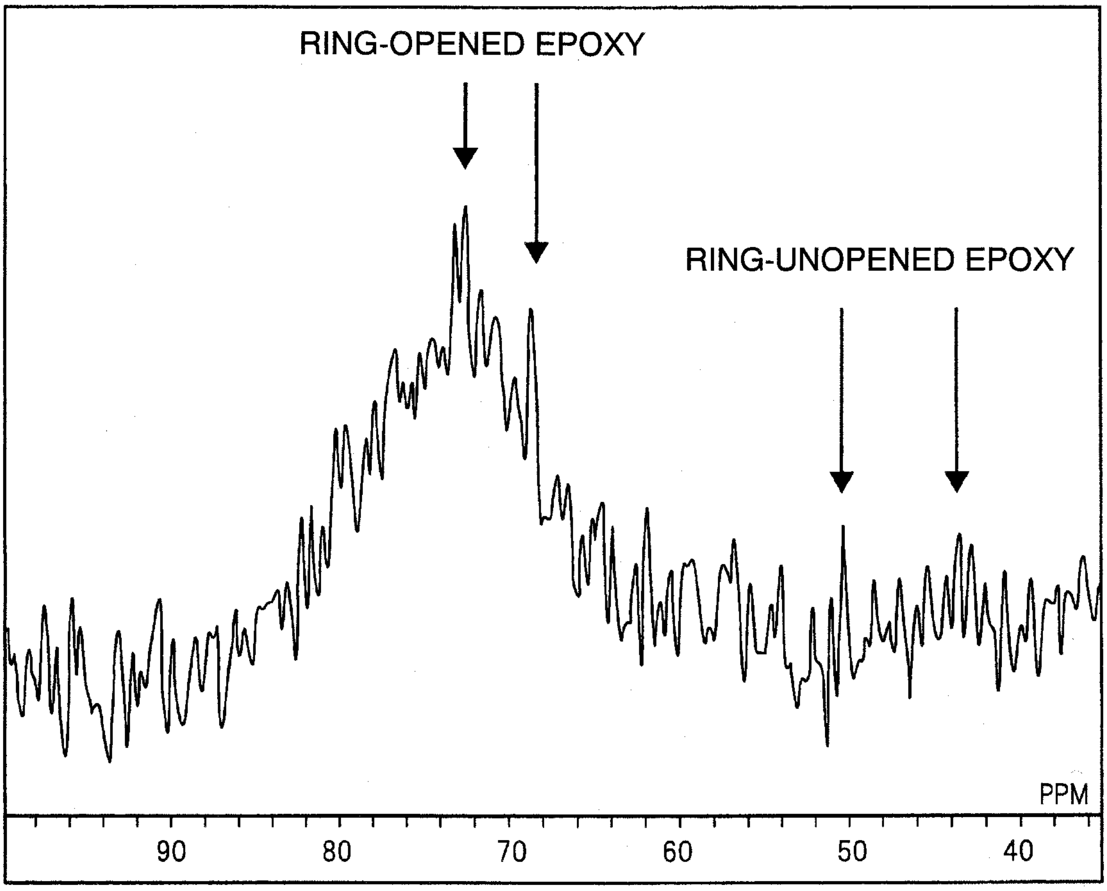

*FIG. 5*

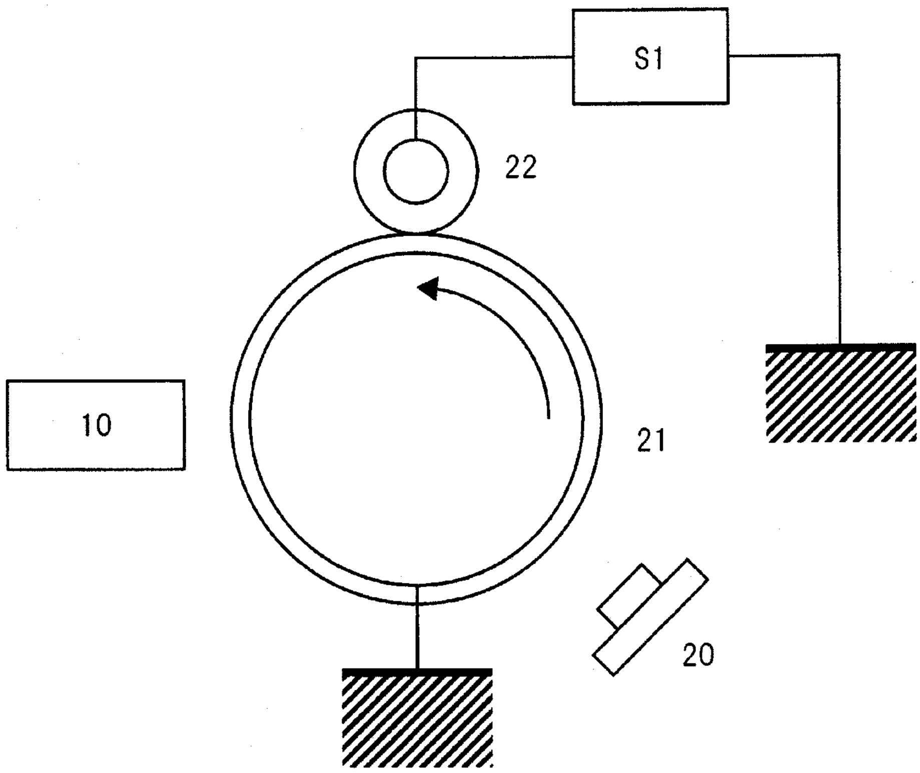

# FIG. 6

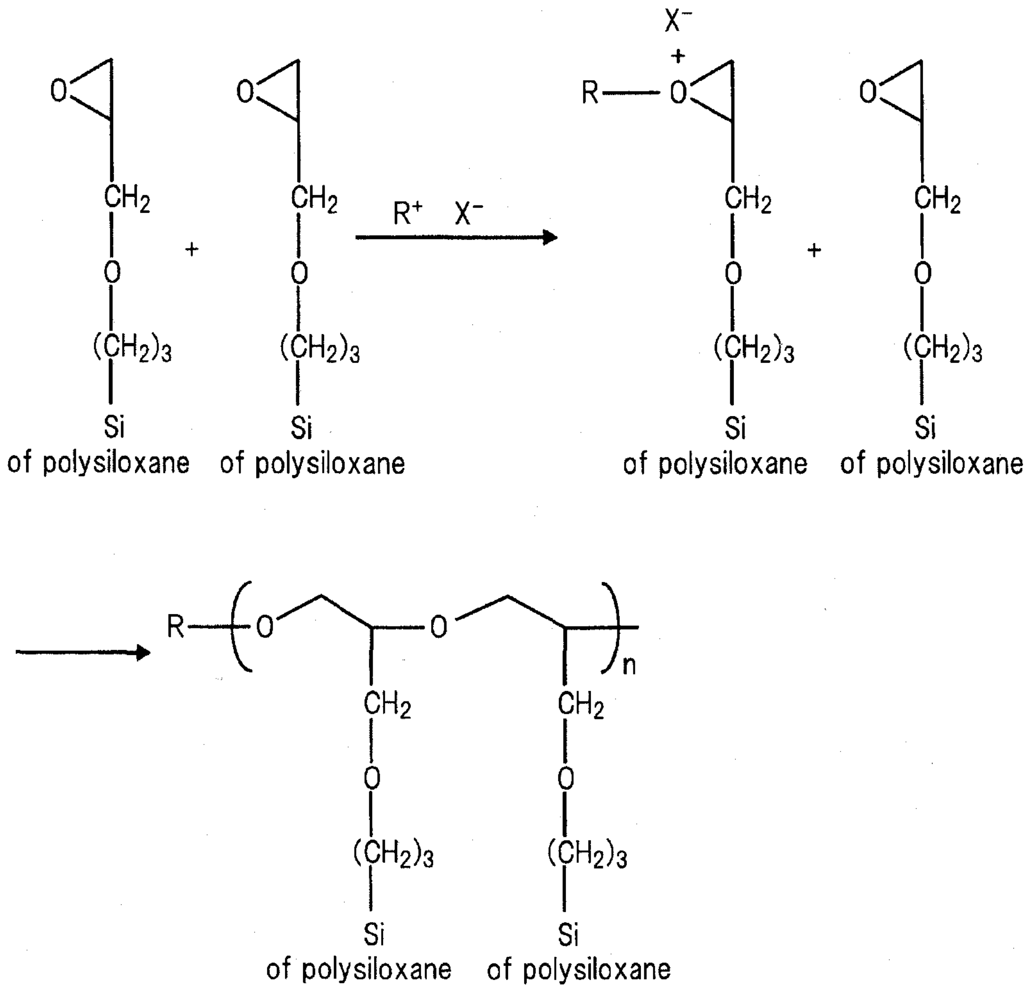

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009086263 A